# EUROPEAN PATENT APPLICATION

(11) **EP 4 752 798 A1**
(43) Date of publication of application: **03.06.2026**
(21) Application number: 25211312.1
(22) Date of filing: 27.10.2025
(51) Int. Cl.: G06Q 10/063, G06Q 50/40

(54) **METHODS OF MODELING AVIATION SUSTAINABILITY STRATEGIES**

(30) Priority: 27.11.2024 US 202418962288
(71) Applicant: The Boeing Company, Arlington, VA 22202 (US)
(72) Inventor: SALZMAN, Addison Parker, Arlington, 22202 (US); TITCHENER, Neil Andrew, Arlington, 22202 (US); COOLEY, Kristine Marie Martini, Arlington, 22202 (US); WONG, Hubert, Arlington, 22202 (US); APPLEGATE, Nicholas David, Arlington, 22202 (US); ABEL, James Matthew, Arlington, 22202 (US); SPRAGUE, Connor M., Arlington, 22202 (US); WILLIAMS, Stephanie Carys, Arlington, 22202 (US)
(74) Representative: Bugnion S.p.A. - US1

(57) **Abstract**

A method (900) of modeling sustainability strategies (116) for an aviation industry is presented. The method (900) comprises receiving (910), at one or more processors (1010), flight traffic information (102) for a plurality of flights over a select time period. A traffic growth model (110) is applied (930) to the flight traffic information (102) to generate projected flight traffic information over a future time period. Baseline calculations (112) are performed (940) on the projected flight information to generate forecasted aviation emissions information over the future time period. User input (104) is received (950) at one or more processors (1010) indicating one or more parameters for each of one or more of a plurality of sustainability strategies (116). The one or more of the plurality of sustainability strategies (116) are applied (960) to the forecasted aviation emissions information to generate adjusted forecasted aviation emissions information. An emissions reduction potential is indicated (970) over the future time period based on the adjusted forecasted aviation emissions information.

## Description

### FIELD

The present disclosure generally relates to modeling sustainability and emissions data for one or more aircraft.

### BACKGROUND

Civil aviation has committed to reaching net zero carbon emissions by 2050, but there is not a highly detailed plan for how to achieve this. Various aspects of aviation will evolve over time as new technology arises - including aircraft themselves, operational efficiency, energy forms, and market-based measures. The aspects themselves are deeply interrelated.

### SUMMARY

A method of modeling sustainability strategies for an aviation industry is presented. The method comprises receiving, at one or more processors, flight traffic information for a plurality of flights over a select time period. A traffic growth model is applied to the flight traffic information to generate projected flight traffic information over a future time period. Baseline calculations are performed on the projected flight information to generate forecasted aviation emissions information over the future time period. User input is received at one or more processors indicating one or more parameters for each of one or more of a plurality of sustainability strategies. The one or more of the plurality of sustainability strategies are applied to the forecasted aviation emissions information to generate adjusted forecasted aviation emissions information. An emissions reduction potential is indicated over the future time period based on the adjusted forecasted aviation emissions information.

This Summary is provided in order to introduce in simplified form a selection of concepts that are further described in the Detailed Description. This Summary is not intended to identify key features or essential features of the claimed subject matter, nor is it intended to be used to limit the scope of the claimed subject matter. The claimed subject matter is not limited to implementations that solve any disadvantages noted in any part of this disclosure.

### BRIEF DESCRIPTION OF THE DRAWINGS

FIG. 1 schematically shows an example modeling pipeline for implementing sustainable aviation strategies.
FIG. 2 illustrates an example energy lifecycle assessment model of the modeling pipeline including well-to-tank and tank-to-wake emissions.
FIG. 3 shows example implementation curves for fleet renewal and fleet growth.
FIG. 4 schematically depicts an example model for aircraft route assignment.
FIG. 5 is a plot showing two example fleet insertion curves.
FIG. 6 is a plot for a method of calculating energy efficiency for existing, reference, and user-defined aircraft.
FIG. 7 is a schematic diagram for hydrogen production and distribution.
FIG. 8 shows an example visual output of an example emissions reduction potential output by the modeling pipeline.
FIG. 9 shows a flow diagram for an example method of modeling sustainability strategies for an aviation industry.
FIG. 10 schematically shows aspects of an example computing system.

### DETAILED DESCRIPTION

Highly-detailed simulation tools exist for the purpose of designing new technologies pertaining to aircraft, operational efficiency solutions, energy systems, and other relevant components of the aviation ecosystem. However, no tools exist to model the system-of-systems problem of decarbonizing aviation, which necessarily requires consideration of the interaction of new forms of renewable energy and aircraft technology. Prior solutions either consider the emissions associated with the entire global economy, or they are focused on the detailed design and simulation of subsystems. Such models do not consider the impacts of aviation at a detailed level. Specific methods are needed to model the emissions from aviation and provide solutions for reducing these emissions.

The disclosed modeling pipeline operates on a database containing flight traffic for historically scheduled passenger and cargo flights. In some examples, if the user wishes to analyze a particular market segment or geographical region, filters are applied to the data set. A traffic growth model may then be applied to project flight traffic information for a future period of time. Baseline calculations can be run on the projected data to calculate aviation emissions information such as fuel burn, energy consumption, and CO₂ emissions for each route. Following this pre-processing, models representing sustainability strategies can be applied to determine their emissions-reduction potential. Emissions other than CO₂ (e.g., contrails, NOx, SOX, etc.) may also be modeled. Novel approaches to climate impact mitigation, including new types of alternative fuels, carbon removals, techno-economics may be integrated into the modeling pipeline. The disclosed modeling pipeline may be an integrated system-of-systems model, which represents the interconnected nature of aircraft, operations, energy, and carbon offsets. This enables users to perform highly interdisciplinary scenario analysis. The modeling pipeline may be implemented in a server-authoritative architecture with APIs that process client requests and provide data for visualization.

The disclosed methods and systems may be used as a tool for airlines and researchers to evaluate different road maps for reducing aviation emissions, eventually reaching zero emissions, while providing an understanding of how all the different aspects of such strategies are interconnected. Airlines and aircraft manufactures may use these methods to evaluate strategies for developing technologies and what types of partnerships are needed with the energy industry. The results of modeling with these methods may be presented to policy makers, legislators, and stakeholders at airlines, energy companies, banks, etc. to influence impactful solutions to attain net zero emissions. This may aid in obtaining cross-sector alignment on viable technology and policy actions that will enable civil aviation to reach their emissions goals.

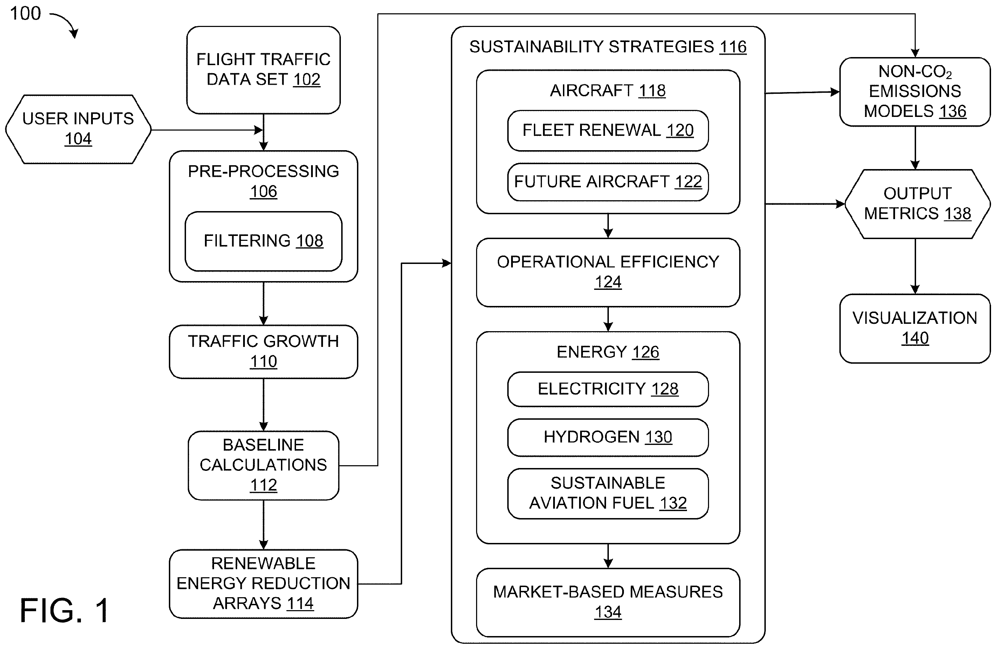

FIG. 1 schematically shows an example modeling pipeline 100 that may operate on a database containing a flight traffic data set 102 for a plurality of scheduled passenger and cargo flights over a given time period (e.g., one year). In some examples, a global data set may be provided. However, user input 104 may be received that informs pre-processing 106 of the flight traffic data set 102, such as apply filtering 108 to flight traffic data set 102 to restrict the data set to a particular market segment, carrier or geographical region, for example. A traffic growth model 110 may then be applied to generate projected flight traffic information for a future time period. Baseline calculations 112 can be run on the (filtered) projected data set to calculate forecasted aviation emissions information, such as fuel burn, energy consumption and emissions (e.g., CO₂ emissions) for each route based on values from flight traffic data set 102. One or more renewable energy reduction arrays 114 may be applied to the data set to provide a baseline for renewable energy emissions reductions, e.g., based on present day metrics.

Following this pre-processing, models representing sustainability strategies 116 are applied to the time-series flight traffic data. Sustainability strategies 116 may include aircraft strategies model 118 (e.g., fleet renewal model component 120, future aircraft model component 122), operational efficiency strategies model 124, energy strategies model 126 (e.g., electricity model component 128, hydrogen model component 130, sustainable aviation fuel (SAF) model component 132), and market-based measures model 134. Each model may behave according to configurations set by the user. The disclosed methods may comprise a component-based architecture wherein each model, representing a single sustainability strategy, can be run independently in any desired sequence, though a default sequence may be provided. Running each model sequentially may output the total reduction in emissions if all strategies are implemented concurrently and allow for the difference in emissions to be attributed to specific models.

Supplemental data sets such as aircraft characteristics or lifecycle carbon intensities of processes may be used by model components as required. Optionally, non-CO₂ emissions models 136 may also be applied to the forecasted aviation emissions information to indicate an aggregate climate impact over the future time period. At each stage, aggregate metrics such as the overall reduction in CO₂ emissions may be calculated and saved as output metrics 138. This information may be used in post-processing to generate visualizations 140 showing the change in metrics for different strategies. Additional metrics, such as the insertion rate of new aircraft into the fleet or the total electricity required for aviation by year, can be calculated from the final metrics after all strategies have been applied.

A baseline flight traffic data set 102 may be derived from real-world flight data for a period of time (e.g., one year) that may be processed, cleaned, validated and aggregated. In some examples, flight traffic data set 102 may comprise aviation emissions information for a plurality of flights over a select time period. Flight traffic data set 102 may comprise a plurality of historical flight data, including metadata for flights including such as origin/destination pair, operator, aircraft type, energy usage, fuel burn, emission, passenger load factor, cargo load factor, weather conditions, etc. The flight data set may comprise a single year of flight data or multiple years. In one example, the flight data set comprises flight data from 2019, the year upon which civil aviation's 2050 emissions reduction goals are based. Newly acquired data may be added to the flight data set and used to adjust projected models. The model may have a model start year and an end-model year which may be default values (e.g., 2019 and 2050) or selected by the user.

Overall, the disclosed method forecasts how sustainability strategies (e.g., traffic growth, aircraft, operations, energy) impact each route, aircraft type in the fleet and fuels being used in each year. The processed flight traffic data set can be aggregated based on unique combinations of aircraft type, route, operator, year, and/or other parameters. The route flown by each operator using each aircraft type and in each year can be aggregated in terms of number of flights.

Each route can be defined by its origin-destination pair or departure and arrival airport. Airports can be defined by their unique International Air Transport Association (IATA) identification codes. The latitude and longitude of each aerodrome is used to determine the great circle distance, (gcd) for a given route. The gcd for each route can be used in fuel burn, energy, and emissions calculations via a corrected distance-flown or block time for the route.

Flights can also be designated as domestic or international. For example, airport IATA codes can be mapped to countries, and each route can be labeled as international if the origin and destination airports are associated with different countries. Following this definition, flights between a country and its associated territories can be labeled as domestic flights. For example, a flight from the contiguous Unites States to Puerto Rico may be considered domestic from an emissions accounting perspective. This distinction is relevant to emissions calculations as emissions from flights on international routes are within the purview of the International Civil Aviation Organization (ICAO) and subject to Carbon Offsetting and Reduction Scheme for International Aviation (CORSIA), while emissions from flights on domestic routes are part of each country's individual emissions inventory.

Finally, whether a flight is designated as a passenger or freighter flight may be determined separately from the aircraft type designation and is therefore a separate attribute. Each flight in the baseline flight traffic data set may include a load factor, be it passenger load and belly cargo on passenger flights, or cargo load on freighter flights. User inputs 104 may provide input variables and parameters for the various models, model components, and modules in modeling pipeline 100. Default values may be used in the absence of specific user input. The user may input parameters and assumptions such as load factors for the models. The user can request or specify energy production systems and parameters, associated life cycle emissions for each energy carrier, etc. International flights may account for energy production in the destination countries. Users may include employees in airline sustainability organizations who are tasked with defining sustainability goals and how to reach them. Researchers in both the aviation industry and energy industries may use these methods to further an understanding of how their areas of expertise are interrelated with other sustainability areas.

Pre-processing 106 may be applied to refine flight traffic data set 102. For example, flights may be excluded, aggregated, averaged, etc. Raw data and metadata may be formatted for use in the subsequent models and modules. Flight data may be organized on a per-route basis based on origin and destination airports.

As one example, user inputs 104 may include parameters for data filtering 108. For example, the user may limit the flight data set to only passenger flights and/or flights within North America. For example, different countries may have different subsidies for different renewable energy sources, different energy production resources, etc. The user may limit the modeling to direct emissions or life-cycle emissions, for example. The traffic growth model 110 may be applied to the pre-processed air traffic data set (e.g., from a single year) to calculate the traffic on each route for each year in the future, thus generating a set of projected flight traffic information. The user can either set a custom annual growth rate (CAGR) for all flights or use a default growth forecast which applies a forecast growth rate by region pair. The traffic growth model 110 is applied to the number of flights on each route, from which values for other metrics such as fuel burn, energy consumption, and emissions can be projected to future years.

Input variables for the traffic growth model 110 may include the number of flights on a route for a given year, the compound annual growth rate of all flight traffic, the compound annual growth rate of flight traffic within a region pair, model start and end years, estimated annual tonnage carried on a route (from the air traffic data set), estimated annual fuel-burn on a route (from the air traffic data set), estimated annual energy consumption on a route (from the air traffic data set), and estimated annual lifecycle emissions (e.g., kg of CO₂ emissions) on a route (from the air traffic data set). The traffic growth model 110 the user selects determines how the CAGR is defined. If the user selects a custom CAGR, then a single value for CAGR may be applied to all routes in the data set for all years in the forecast. If the user selects a default traffic growth forecast, the value of the CAGR may be set on a route by geographic region pair. This means that the CAGR does not necessarily have the same value for all routes; rather it depends on the country of the route's origin and destination airports. Once the CAGR on a particular route has been assigned, the value for CAGR may be used to calculate flight traffic for future years, with the addition of the growth rate being a function of region. The traffic growth modeling may be performed separately for passenger aircraft and cargo aircraft, which may also have different values for CAGR. Baseline calculations 112 inform associated emission, fuel burn, etc. for a given route, aircraft type, carrier, etc. Baseline calculations 112 may be applied to the projected flight traffic information to generate per-route information in the future (e.g., on a year-to-year basis). In examples where the flight traffic data set includes aviation emissions, the base calculations 112 may be applied to the projected flight traffic information to generate the forecasted aviation emissions information. The calculations may be further striated by aircraft load, weather conditions, etc.

Input variables to the baseline calculations 112 may include aircraft types (e.g., as defined using ICAO designations), the carbon intensity of the energy carrier used by a particular aircraft type, the number of seats associated with each aircraft type (for passenger flights), an average weight per passenger (for passenger flights), an average freight capacity per aircraft type, a belly cargo load factor, a passenger load factor, an aircraft load factor for dedicated freighter aircraft, and a lower heating value for jet fuel (e.g., gravimetric energy density of the fuel).

Output variables from baseline calculations 112 may include energy consumption on a per-route basis, greenhouse gas emissions on a per-route basis, payload capacity by aircraft type, average payload carried by aircraft type, and a series of variables expressed as a function of each aircraft type, route, and year, including total ton-kilometers, revenue ton-kilometers, revenue passenger capacity, revenue cargo capacity, available capacity, available passenger capacity, and available freight capacity.

Payload capacities may consider both passengers and freight. For passenger aircraft, the payload capacity may be calculated based on the standard passenger weight, the number of available seats, and the belly cargo capacity. For freighter aircraft, the payload capacity may simply be a characteristic of aircraft type.

In some examples, the total ton-kilometers may be defined as the available traffic capacity by aircraft type and route. The available capacity can be split into the contributions from passenger and cargo and is given by the total available passenger ton-kilometers and total available cargo ton-kilometers. Revenue payload metrics may account for the actual payload (e.g., passengers and cargo) carried on flights and may be computed from the payload capacity metrics using load factors.

In some examples, capacity may be measured in terms of seats and passengers instead of weights. These metrics, available seat kilometers, and revenue passenger kilometers, can be computed from the total available passenger-ton kilometers and the revenue passenger-ton kilometers by simply dividing by the weight per passenger. These metrics can also be computed directly from the distance flown, payload capacities, and payload carried. Revenue-ton kilometers per year may be the sum over all aircraft types and routes. Payload capacity may be converted from revenue payload utilizing the load factors.

The number of flights on each combination of route and aircraft type may be computed directly based on an assumed quantity of total revenue ton-kilometers. Route distance and payload weight may then be factored in for calculations dealing with traffic growth and aircraft replacement. The total number of flights can be calculated from the cumulative sum of flights for each route and aircraft type.

In-flight energy usage for the aircraft in the baseline flight traffic data set may be computed using fuel burn as a function of distance flown and aircraft type for in-service aircraft models. Distance flown may be calculated using any suitable methods, such as based on the uncorrected great circle distance between origin and destination airports by applying a 51 nautical mile correction. In some examples, a polynomial curve fit may be used that estimates the fuel consumption of a flight by aircraft type as a function of two inputs - block time and payload weight carried. A separate function exists to estimate the block time flown by an aircraft from a route great circle distance given in nautical miles.

The fuel burn per flight may be converted into equivalent energy usage per flight using the lower heating value of jet fuel, which is a measure of the fuel's energy density. The total energy usage is then given by the energy usage per flight multiplied by the number of flights across all aircraft types, routes, and years. Energy usage of other energy types may be considered and summed to determine energy usage across all energy carriers on a given route. The emissions of a specific aircraft type on a given route in a given year may be based on the carbon intensity of the energy carrier being used by the specific aircraft. The emissions on each router may be based on the sum of the contributions from each aircraft as a function of the carbon intensity of each associated energy carrier. These values may be summed to yield the total lifecycle emissions of all energy carriers on all routes.

Fuel efficiency is a measure of energy consumption per unit payload and distance traveled, where total energy is measured in megajoules (MJ) and the payload-distance metric in revenue ton-kilometers includes both passengers and freight. Emissions intensity may be defined similarly to the efficiency, but in terms of emissions generated per unit payload and distance traveled.

A fleet size estimation model may be used to estimate the number of physical aircraft needed to service the traffic (passenger or cargo) on a route. From this, metrics such as insertion rates of new aircraft necessary to fulfil a chosen fleet scenario can be determined. Input variables may include aircraft types. Applied constants may include the average amount of traffic carried by a single aircraft of a particular size in a year, and a correction factor for the average traffic carried by the aircraft with different energy carriers from increased turnaround timed resulting in reduced utilization. Output variables may include the fractional number of aircraft needed to service all flight traffic on a route, and the annual insertion rate of new aircraft to the fleet.

To convert from number of flights to fractional number of aircraft needed to service traffic on a route, the average traffic carried by one aircraft each year may be calculated. For passenger flights, this may be done on an available seat-kilometer (ASK) basis, while for cargo flights this may be done on an available ton-kilometer (ATK) basis. The average annual traffic carried by a particular aircraft type may be calculated for multiple ranges of capacities (based on seat count or cargo capacity), from real-world flight traffic for a given year. To account for aircraft which only flew for part of the year (e.g. midyear deliveries or type groundings), the amount of traffic carried by each aircraft may be corrected based on the number of months it was active to yield the predicted traffic had it flown for the whole year.

The fractional number of aircraft needed to service the traffic on each route can be found by multiplying the traffic on that route by the average traffic carried by one aircraft in its particular capacity bucket. The average traffic carried by aircraft may assume flights using conventional jet fuel only; aircraft using novel energy carriers such as electricity or hydrogen may carry less traffic per year resulting from increased turnaround times. A correction factor may thus be applied to the average traffic carried based on its energy type. For example, a correction factor of 0.75 may be applied for hydrogen aircraft, while a correction factor of 0.5 may be applied for battery electric aircraft. The insertion rate of new aircraft onto a route is simply the time derivative of the fractional aircraft count.

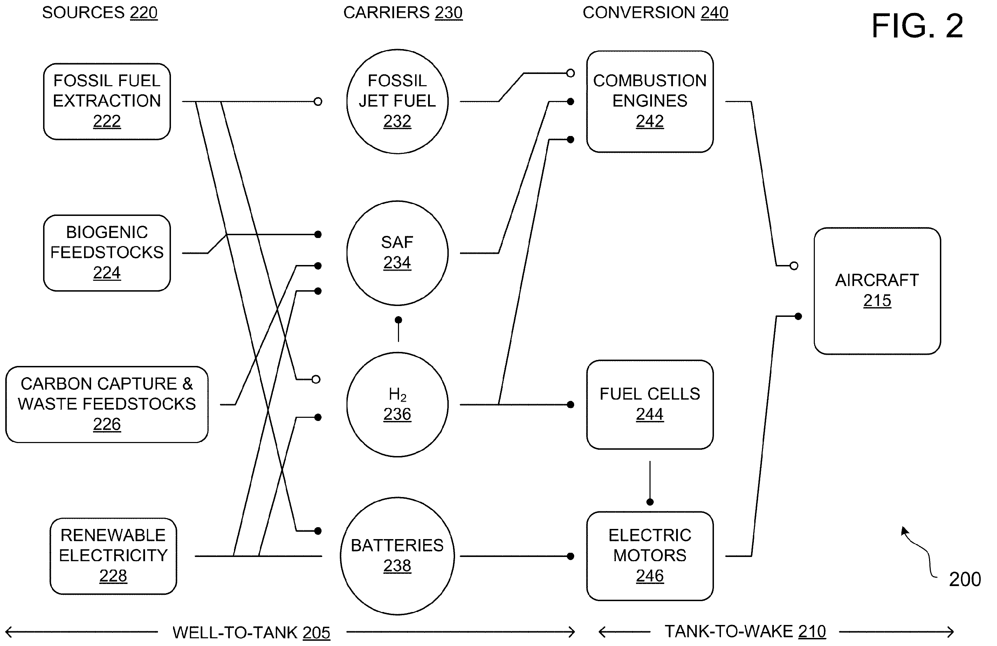

FIG. 2 illustrates an example energy lifecycle assessment model 200 of modeling pipeline 100. Energy lifecycle assessment model 200 may be used in the calculation of total emissions, including well-to-tank emissions 205 and tank-to-wake emissions 210. Upstream of the conversion of energy into motion, well-to-tank emissions 205 accounts for the environmental impacts of extracting, producing, and distributing an energy carrier for use in an aircraft 215. The tank-to-wake, or direct emissions 210 include those coming directly from the process of converting the energy carrier into motion.

For example, FIG. 2 indicates a plurality of energy sources 220, including fossil fuel extraction 222, biogenic feedstocks 224, carbon capture and waste feedstocks 226, and renewable electricity sources 228. Each energy source may be associated with an environmental impact, such as an amount of emissions used to generate one equivalent unit of energy. Energy sources 220 may be converted to energy carriers 230. Energy carriers 230 may include fossil jet fuel 232, SAF 234, H₂ 236, and batteries 238. Extracted fossil fuels 222 may be used to generate fossil jet fuel 232, as well as to generate electricity used in the production of H₂ 236, and batteries 238. Biogenic feedstocks 224 and carbon capture and waste feedstocks 226 may be used in the production of SAF. Renewable electricity sources 228 (e.g., wind, thermal, solar) may be used in the production of SAF 234, H₂ 236, and batteries 238.

Energy carriers 230 may be subject to conversion methods 240. For example, fossil jet fuel 232, SAF 234, and H₂ 236 may be used in combustion engines 242. H₂ 236 may be used to generate fuel cells 244. Batteries 238 and fuel cells 244 may be used to power electric motors 246. Combustion engines 242 and electric motors 246 may thus be used to power aircraft 215.

Hydrogen, electricity, and SAF models are interrelated. Electrolyzers can be used to produce hydrogen from water. As such, the electricity for hydrogen production may be derived from the power grid or a separate generating source. SAF may be produced through Power-to-liquid methods. Thus the carbon intensity of SAF and hydrogen production may be electricity dependent. Power-to-liquid (PtL) methods may model how the carbon intensity of electricity, hydrogen and SAF generate fuel via the PtL pathway. Feedback loops may be modeled between these energy components in the PtL pathway.

Returning to FIG. 1, renewable energy reduction arrays 114 may define the electricity, hydrogen, and SAF production over time to indicate the corresponding carbon intensities of each energy carrier are over a time series. This may be expressed relative to a fossil fuel baseline. This provides a baseline that may be adjusted as further model parameters are defined by the user.

One or more sustainability strategies 116 may be applied to the pre-processed data and forecasted aviation emissions information to model changes in emissions over time based on the applied sustainability strategies. Herein, four primary strategy models are described in detail (aircraft strategy model 118, operational efficiency strategies model 124, energy strategies model 126, and market-based measures model 134) although others may be applied additionally or alternatively. Sustainability strategies 116 may be applied in the sequence they are described, or in a sequence provided by a user.

Some sustainability strategies inform the same output variables, although not all output variables are necessarily impacted by all of the sustainability strategies. As such, there may be feedback loops or iterative processing of the different sustainability strategies that are not described herein, but should be apparent to those skilled in the art. For example, energy models that favor hydrogen production may inform aircraft models that increase the number of hydrogen-fueled aircraft added to a fleet.

Aircraft strategies model 118 may model the effects of growing and changing aircraft fleets over time (e.g., for an operator). Aircraft fleets will be assumed to increase in size over time to meet traffic growth models. Fleet renewal model components 120 and future aircraft model components 122 may be considered separately, in tandem, and/or iteratively to model how the composition of an aircraft fleet changes and grows over time.

Fleet renewal model component 120 may model removing older aircraft from a fleet and replacing them with their latest-generation equivalents. The user may provide input to control how quickly older aircraft are replaced in the fleet, and then view the impact on fleetwide fuel burn and emissions. The model can also provide the user with an indication as to how many new aircraft need to be added to the fleet annually to renew the entire fleet by a certain target year.

Input variables to fleet renewal model component 120 may include the phase-out duration of older aircraft in the fleet, which may be defined as the length of time between the end of production for an aircraft type and the exit of the last instance of that type from the fleet. Input variables may additionally or alternatively include a ramp shape parameter, such as a dimensionless number controlling how steep the ramp up/down period is. Input variables may additionally or alternatively include the cargo payload capacity of an aircraft type, the great circle distance on each route, the number of flights by aircraft type, route, and year, the seating capacity of each passenger aircraft type, the total cargo tonnage kilometers on a route, the start year for the model, the start year of the fleet renewal process (this may default to being the same year as the start year of the model run), and the end of production year for each existing aircraft type. Output variables may include the number of flights by aircraft type and route in a given year, and a phase-out curve of previous generation aircraft.

Old aircraft may be phased out from a fleet by defining a phase-out curve. The curve describes the portion of flights relative to the start year of the model that remain serviced by an older aircraft type each year. The phase out curve may be an S-curve derived from the curve for a cumulative beta distribution function. If an aircraft's end of production year is before the start year of the model, the phase-out duration for that aircraft type may be shortened such that the last aircraft leaves the fleet a given number of years after the end of its production run.

New aircraft are added to the fleet both to service traffic growth and to replace older aircraft that have been phased out. It may be assumed that all new aircraft added to the fleet are latest-generation aircraft, defined as those either actively in production at the start year of the model, or undergoing certification with commercial certification in the near term. The specific aircraft type selected to replace each previous-generation aircraft type may be chosen to maintain size similarity and the same original equipment manufacturer (OEM) where possible. As an example, flights serviced by a previous-generation aircraft may be replaced one-for-one with flights by their latest-generation replacement. Flights by new aircraft type may account for fleet renewal on a route as well as to service growth on a route. Total flight numbers may be corrected for instances where there was a temporary reduction in total flight traffic (e.g., during the pandemic). An ideal traffic growth curve may be applied during such a period to allow new aircraft to continue to be delivered for future growth while existing aircraft are temporarily parked. The curve may be an exponential curve with a CAGR chosen such that is matches the real traffic growth curve for a chosen reference year in the future.

The total number of flights serviced by new latest generation aircraft on a route in a given year is thus based on fleet renewal and fleet growth, while the number of flights still serviced by previous-generation aircraft may be found by calculating the difference between total traffic and the number of flights serviced by new aircraft.

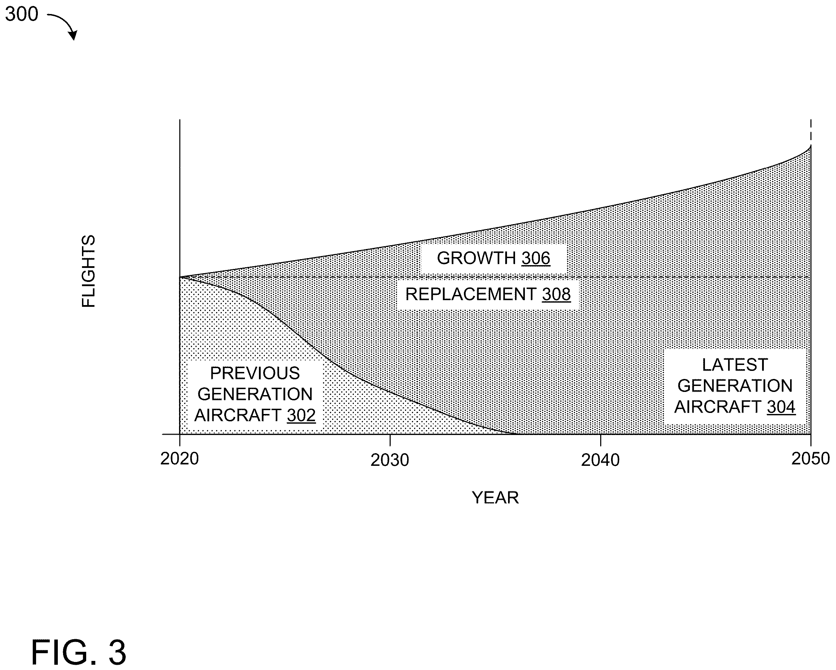

As an example, FIG. 3 shows example implementation curves 300 for fleet renewal and fleet growth. As shown, the total number of flights increases based on a traffic growth curve from 2020 (model start date) to 2050 (end model date). The fleet includes previous generation aircraft 302 and latest generation aircraft 304. As the model progresses, latest generation aircraft are added based on fleet growth 306, as well as for fleet replacement 308, while previous generation aircraft are phased out. In this example, previous generation aircraft 302 initially comprise the entire fleet (at 2020), and are phased out over a replacement curve by 2035. Latest generation aircraft 304 are added beginning in 2020, and comprise the entire fleet by 2035. Additional growth between 2035 and 2050 is facilitated entirely through the introduction of latest generation aircraft 304.

The payload capacity (seating and/or cargo) of a new aircraft may be different from the one it replaced. To maintain constant traffic on all routes before and after fleet renewal is applied, an adjustment may be made to the number of flights serviced by new aircraft. For passenger aircraft, a seat correction factor may be applied to the number of flights by new aircraft to conserve ASKs on a route.

A similar correction may be applied to freighter aircraft based on the cargo capacity of the old and new aircraft on each route. However, an additional capacity factor may be included to account for the change in belly cargo capacity resulting from passenger aircraft replacement. Since passenger and freighter aircraft do not fly on the exact same routes, this factor is calculated for each region pair (e.g. North America -> China).

The additional capacity factor may be calculated as the ratio of total additional/missing TCTKs (from the change in belly cargo and total TCTKs of dedicated cargo aircraft in each region pair). This term may be derived by applying a conservation of cargo tonnage before and after fleet renewal, and determining the delta in belly cargo tonnage carried after passenger aircraft are renewed. Following these adjustments for capacity, the final number of flights for latest-generation aircraft that are added from fleet renewal may be combined with any latest generation aircraft already servicing that route, and the new number of flights serviced by previous generation aircraft may be determined accordingly.

Since the latest-generation aircraft being added to the fleet are existing aircraft types, the standard methods for calculating fleetwide fuel burn and emissions can be used. Fuel burn may simply be recalculated on each route using the coefficients for the new aircraft.

Future aircraft model component 122 may introduce future aircraft types that do not exist yet into the fleet. This may include both conventionally fueled aircraft incorporating new technologies that reduce fuel consumption and aircraft fueled by completely new energy carriers such as hydrogen and electricity. The user can create a fleet of future aircraft, define which routes they are placed on, the entry to service year, and the final market share. The model then calculates the number of flights on those routes serviced by future aircraft types and the resulting change in energy consumption and emissions.

Input variables to the future aircraft model 122 may include the percentage of traffic serviced by a future aircraft type in a given future year on addressable routes (e.g., those fulfilling market and range constraints), the entry into service year of each future aircraft type, the fleet insertion time of a given aircraft type, and a dimensionless factor describing the shape of the fleet insertion curve. Input variables may additionally or alternatively include the tank-to-wake energy consumption of a reference aircraft, the default difference in energy consumption per seat kilometer relative to the average of the best-in-class existing aircraft of the same size class, and a custom difference in energy consumption per seat kilometer relative to the average of the best-in-class existing aircraft of the same size class. Input variables may further include the average lifecycle carbon intensity of each energy type, the tank-to-wake energy consumption on each route per year, the total number of flights on each route per year, the total available capacity on each route per year, the average passenger load factor, and the average weight of a passenger and their belongings. For battery electric aircraft, the input variables may additionally or alternatively include the system charging efficiency of the battery electric aircraft. This may include losses directly from battery charging and those from electricity distribution to the airport. Input variables for battery electric aircraft may additionally or alternatively include the lifetime of an aircraft battery pack in number of charge/discharge cycles, and the energy required to produce a replacement aircraft battery pack.

Output variables for the future aircraft model 122 may include tank-to-wake aircraft energy consumption on each route per year, well-to-wake lifecycle emissions on each route per year, the number of flights performed on each route per year, and the available capacity on each route per year.

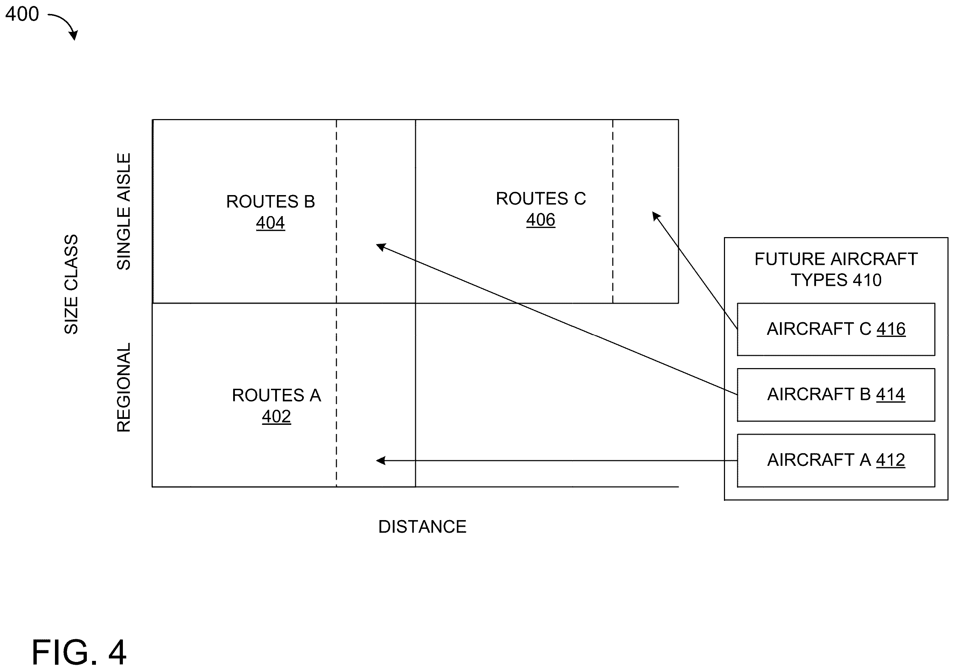

The assignment of future aircraft types onto routes is determined by range and market segment constraints. To calculate this, the set of aircraft types that can operate on a particular route, based on its distance and existing aircraft size class, is found. This may be solved by drawing the range and market segment constraints for each future aircraft type as regions on a 2D plane, such as shown in FIG. 4. FIG. 4 schematically depicts an example model 400 for aircraft route assignment. Routes are divided into routes A 402 (e.g., shorter, regional flights), routes B 404 (e.g., shorter routes serviced by single aisle aircraft), and routes C 406 (e.g., longer routes serviced by single aisle aircraft). Future aircraft types 410 can then be added to the routes. The position of each route on model 400 determines the set of future aircraft that are added to it. For example, aircraft A 412 is added only to routes A 402, routes serviced by regional aircraft for which it has sufficient range. For example, new aircraft (e.g., battery electric aircraft) may have a limited range and thus be limited to being assigned to certain routes. While aircraft B 414 has the same range constraint as aircraft A 412, it is targeted to short routes that are currently serviced by single aisle aircraft (routes B 404). Aircraft C 416 has a greater range capability than Aircraft A 412 or aircraft B 414, and it is only assigned to routes C 406, routes currently serviced by single aisle aircraft.

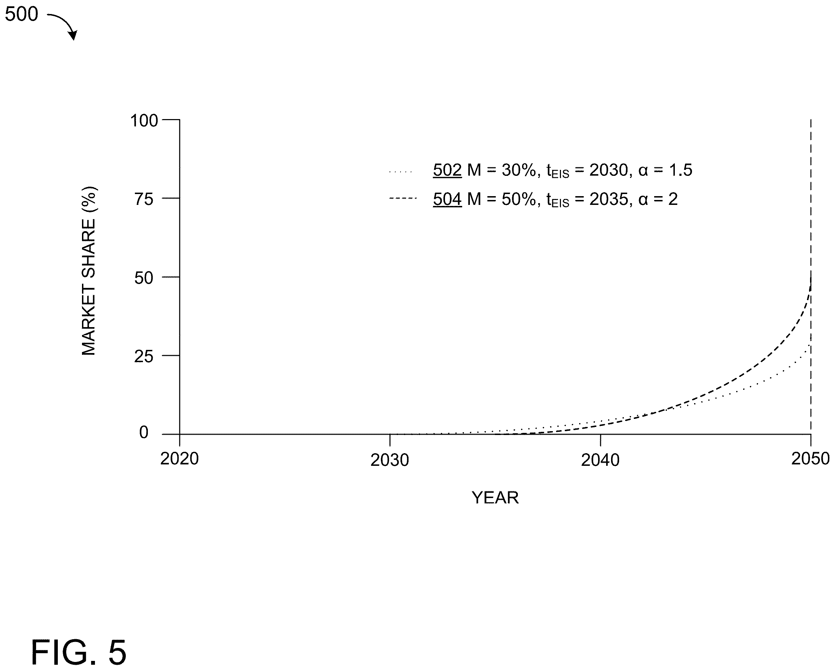

Route assignments can be iterative, and may limit how many of a certain type of aircraft can be added to a fleet over time. In some examples, current aircraft may be assigned to other routes (e.g., battery powered flights take over regional flights on routes A 402, the conventional planes that were on those routes can be assigned to routes B 404). The number of flights serviced by each future aircraft type on each route may be calculated using a fleet insertion curve which describes how the share of flights on a route serviced by an aircraft type changes over time. An s-curve may be used to build these fleet insertion curves, the shape of which may be determined by the entry-into-service year, assumed market share at a future year, and a curve shape parameter set by the user. An insertion duration may be calculated so that the value of the traffic share curve at a future date matches the user set market share for that future date. For example, FIG. 5 is a plot 500 showing two example fleet insertion curves (502, 504). Fleet insertion curve 502 is defined by a market share of 30%, a time entry insertion of 2030, and a curve shape of α = 1.5. Fleet insertion curve 504 is defined by a market share of 50%, a time entry insertion of 2035, and a curve shape of α = 2.

On some routes, the sum of market shares of all future aircraft types in the future year may be greater than 1. To correct for this, a market share normalization factor may be calculated for each set of future aircraft. Such a factor normalizes the insertion curves for each aircraft such that the sum of their market shares in the future year is equal to 1, yielding corrected fleet insertion curves.

The uncorrected number of flights serviced by each future aircraft type in place of each existing aircraft type on each route may be found by multiplying the insertion curves by the total number of flights each future aircraft is eligible to service each year. To ensure total passenger traffic is conserved, a capacity correction factor may be applied to the number of flights for each future aircraft replacing each existing aircraft type on each route, based on the ratio of capacities of the route's old and new aircraft. Total tonnage carried may change if a future aircraft type has a different belly cargo capacity than the existing aircraft types it replaces. This is because unlike in the fleet renewal model, there are no dedicated cargo future aircraft types to shift cargo traffic onto to conserve overall tonnage in the route network.

The number of flights serviced by existing aircraft on each route may be found by multiplying the total number of flights on a route by one minus the sum of insertion curves from all future aircraft types on each route and existing aircraft type. In other words, the number of flights serviced by each aircraft that exists in the fleet is simply the market share of those aircraft multiplied by the number of flights on the routes that are eligible to be serviced by those aircraft. The resulting number of flights is a combination of future aircraft and existing aircraft which can include both the latest and previous generation aircraft types.

The energy consumption of each future aircraft type on each route may be calculated from the aircraft performance model for the reference aircraft model it is based on. These reference performance models may be stored as payload-range-energy tables giving the energy consumption for each reference future aircraft as a function of payload and distance flown. The reference aircraft may be designed based on generic requirements that are representative of each aircraft class and energy carrier. A linear interpolation algorithm may be used to calculate the energy consumption at any distance and payload based on the discrete points in the tables.

A constant payload value may be used for all routes, consistent with the assumption used in the model for existing aircraft. This may reduce the 2D linear interpolation function to a 1D linear interpolation function of flight distance alone.

Each reference future aircraft model has a default energy efficiency delta relative to the best-in-class existing aircraft in its size class. If the user selects a different energy efficiency delta to the baseline model's default value, a scalar multiplier may be applied to all energy values in the fuel consumption table so that the aircraft's actual energy efficiency matches the user input.

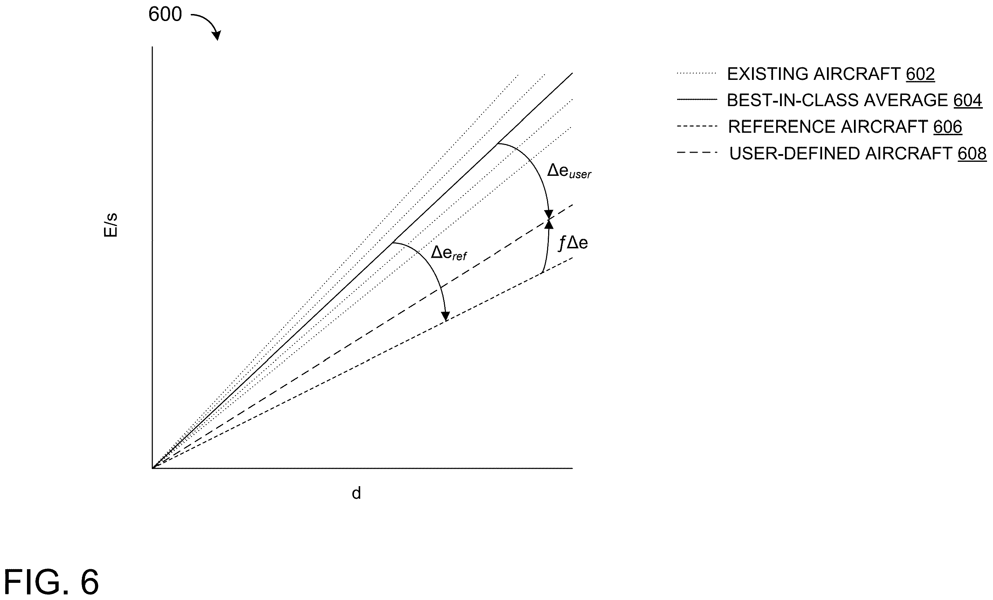

FIG. 6 is a plot 600 for a method of calculating energy efficiency for existing, reference, and user-defined aircraft. Each line on plot 600 represents the energy consumption (E) per seat (s) as a function of distance traveled, or how much energy does an aircraft consume per passenger per kilometer traveled. Existing aircraft are represented by lines 602. A best-in-class average for existing aircraft is represented by line 604. New or future aircraft are described in context of a reference aircraft, represented by line 606. The improvement in energy consumption (Δe*_{ref}*) for the new, reference aircraft can then be determined. For example, the reference aircraft may be a new, hydrogen powered single aisle airplane. Existing single aisle aircraft are represented by lines 602 may be used to generate a best-in-class average based on the current fuel efficiency of the existing aircraft in the class. The reference aircraft may have an estimated fuel efficiency that may be retrieved from a database. The user may then define fuel efficiency characteristics of a user-defined aircraft 608 based on the reference aircraft (*f*Δe). When the user-defined aircraft is assigned to a route, the emissions savings may be determined based on the best-in-class average (Δe*ᵤₛₑᵣ*).

The total energy usage for a fleet is the sum of the contributions of the old routes (using existing aircraft) and new routes using future aircraft. The total carbon emissions of each future aircraft type on each route may simply be the product of the total amount of energy consumed in-flight and the lifecycle carbon emissions of each energy carrier. For novel energy carriers, these life cycle carbon intensities may be pulled from the electricity and hydrogen models in the energy model. For aircraft fueled by conventional jet fuel, the carbon intensity of conventional jet fuel is used. Reductions in the carbon intensity of jet fuel from the introduction of SAF may be applied later in the modeling pipeline.

Note that the life cycle emissions model for battery electric flight also includes two additional terms: a term for energy lost in power distribution and battery charging, and a term for the energy expended in producing replacement batteries. Loss terms for other energy carriers may be assumed to be baked into the life cycle carbon intensity of the energy carrier, so no additional terms may be necessary.

Returning to FIG. 1, an operational efficiency model 124 may allow for operational improvements to be applied to any or all segments of the existing air transportation system, including the aircraft itself, operation of the aircraft at airports, air traffic management, flight routing, and passenger load factors.

For example, improvements in passenger load factors may reduce the number of flights required to meet future travel demands. Efficiency improvements to each segment of the system may be assumed to be independent of the other segments, and can then be summed to determine system-wide improvements to operations as a function of time. For example, an efficiency improvement may be calculated for each future year with the magnitude of the improvement increasing each year (e.g., linearly).

Input variables may include aircraft energy consumption (e.g., tank-to-wake) on each route per year, life-cycle emissions (e.g., well-to-wake) on each route per year, the number of flights on each route per year, and the available capacity (e.g., passengers, cargo) on each route per year. Input variables may additionally or alternatively include changes in energy consumption in future years over the baseline energy consumption due to aircraft retrofit and maintenance improvement in future years, due to fleet and airport operations in future years, and/or due to air traffic management improvements in future years. A baseline passenger load factor prior to applying operational improvements may be applied, as well as future passenger load factors.

Output variables may include aircraft energy consumption on each route per year following the application of operational changes, life-cycle emissions on each route per year following the application of operational changes, the number of flights on each route per year following the application of operational changes, and the available capacity on each route per year following the application of operational changes. Changes in energy consumption may be output due to aircraft retrofit and maintenance improvements, due to fleet and airport operations improvements, and/or due to air traffic management improvements. A projected passenger load factor for future years may also be output.

Improvements due to changes in passenger load factor may be based on a ratio of the passenger load factor prior to the model being applied over a projected passenger load factor. Energy and emissions for each route can be determined by applying an operational efficiency factor to the input aircraft energy consumption and life-cycle emissions on each route per year. Total fleet-wide energy and emissions can then be determined by summing across all aircraft types and routes.

Changes in energy consumption due to aircraft retrofit and maintenance improvements, due to fleet and airport operations improvements, and/or due to air traffic management improvements do not impact the number of flights or payload-distance metrics. However, changes in passenger load factor may affect these metrics if it is assumed that the available capacity in the air transportation system is held constant each year as various emissions reduction strategies are applied. The passenger load factor may thus impact the number of flights and the revenue passenger-kilometers associated with passenger aircraft, but not the number of flights flown by freighter aircraft.

The energy strategies model 126 includes components associated with the production of different forms of energy, such as electricity model component 128, hydrogen model component 130, and sustainable aviation fuels (SAF) model component 132. These individual model components may be used to compute the carbon intensity of each type of energy over time based on various technology and market assumptions for each portion of the energy system. The resulting carbon intensity of each fuel may then be combined with the energy consumption of each aircraft type from the preceding models (e.g., future aircraft) to determine the resulting lifecycle emissions associated with operation of these aircraft. International flights may account for energy production in the destination countries. For example, different countries may have different subsidies for different renewable energy sources, different energy production resources, etc. Energy models may feedback onto aircraft renewal models based on the interconnectivity between aircraft and energy systems.

The electricity model component 128 may be comprised of a plurality of energy generation sources that represent the most prominent sources of electricity. For example, energy generation sources may include wind, hydroelectricity, photovoltaic solar, bioenergy, coal, natural gas, oil, nuclear, and other renewables (e.g., tidal, geothermal, concentrated solar, novel technologies). In any given year, the composition of the energy generation sources must add up to 1. The electricity composition and the average carbon intensity of each production method determines the overall emissions associated with charging all-electric aircraft, producing hydrogen via electrolysis, and powering direct air capture.

Input variables to the electricity model component 128 may include user-input share of electricity produced by each electricity generating type in an end-model year, average carbon intensity of each electricity generation method, an electricity generation method market uptake transition speed shape parameter, and a measured share of electricity produced by each electricity generating type in a model-start year.

In all energy models, the market share of each component of the energy system (in this case electricity generation) up to the end-model year is modeled using a half S-curve. This shape was chosen since the market adoption rates of various alternative energy technologies is not expected to plateau before the end-model year. Assuming all electricity types have non-zero global market shares in the model-start year, it can be assumed that the market entry year and the simulation start year are the same. However, newer forms of electricity type may have a later simulation start year that will adjust the half S-curve. A single average value can be used for the carbon intensity of each electricity generating method. This value can be assumed to be constant over time. The aggregate carbon intensity of electricity generation can be calculated using the weighted average of the carbon intensities of each electricity source.

The hydrogen model component 130 may calculate the carbon intensity and other metrics associated with the production of hydrogen from various sources. The model may calculate emissions for both liquid hydrogen for use directly in aircraft, and gaseous hydrogen for use as a feedstock for SAF production. Options for hydrogen production include electrolysis (e.g., green hydrogen) and steam methane reforming (SMR) (e.g., grey hydrogen) derived from natural gas.

Input variables to the hydrogen model component 130 may include hydrogen electrolysis market share in the model-end year, hydrogen electrolysis insertion year, and a dimensionless hydrogen electrolysis market entry shape parameter. Electrical energy requirements may be included for liquefaction per unit energy of hydrogen, for electrolysis per unit energy of hydrogen, and for SMR per unit energy of hydrogen. Input variables may additionally or alternatively include hydrogen liquefaction boil-off recovery fraction, a fraction of hydrogen vapor loss, a constant carbon intensity of electrolysis, and a constant carbon intensity of SMR. Input variables may additionally or alternatively include an equivalent emissions potential of direct hydrogen emissions into the atmosphere, electricity carbon intensity, and a number of liquefactions. Input variables may additionally or alternatively include overall production emissions of gaseous hydrogen by production method, overall production emissions of a unit of produced liquid hydrogen by production method, and overall production emissions of a unit of delivered liquid hydrogen by production method. Input variables may additionally or alternatively include emissions from the liquefaction of a unit of hydrogen, the ratio of the amount of hydrogen delivered to the amount of hydrogen produced (including losses) and the ratio of the amount of hydrogen liquified to the amount of hydrogen produced (including hydrogen re-liquified in a boiloff recovery unit).

Output variables from the hydrogen model component 130 may include an average carbon intensity of liquid hydrogen production from well to aircraft fueling (well-to-tank), an average carbon intensity of gaseous hydrogen production used in the production of SAF, and the share of hydrogen produced by different production pathways by year.

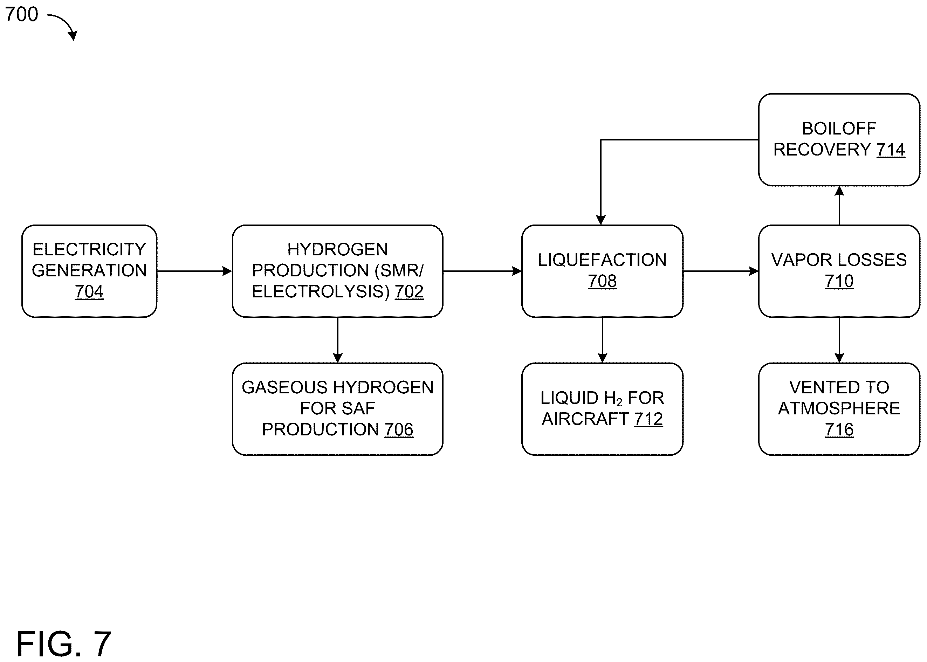

FIG. 7 shows a schematic diagram 700 for hydrogen production and distribution. The hydrogen model component 130 may include two hydrogen production pathways 702, steam methane reforming (SMR) and electrolysis driven by electricity generation 704. At the model start year, it may be assumed that all hydrogen is produced via SMR. The introduction of electrolysis into the hydrogen production market may be modeled with a half-S curve. The shape of this curve may be based on the user-input market share of electrolysis in the end-model year, the insertion year, and the market entry shape parameter.

The CO₂ equivalent emissions associated with hydrogen production and distribution may be split into three components: 1) lifecycle emissions from gaseous hydrogen production 706 for SAF production (via SMR or electrolysis); 2) lifecycle emissions from hydrogen liquefaction 708; and 3) equivalent emissions from hydrogen vapor losses 710 to the atmosphere.

The emissions associated with production of hydrogen from electrolysis contains two terms: the direct emissions associated with the electricity required to power the electrolyzers, and an indirect term to account for the emissions due to stack degradation and replacement and hydrogen distribution. The carbon intensity of electricity generation can be either obtained directly from the electricity model component 128 (representing the use electricity from the grid for hydrogen production) or can be set to a custom value (representing the use of a dedicated or "off-grid" sup-ply of electricity). For SMR, the emission associated with production take a similar form, but both the electrical energy intensity associated with SMR and the carbon intensity of production of SMR may have constant assumed valued.

The carbon intensity of liquefaction 708 that yields liquid H₂ for aircraft 712 can be expressed as the product of the electrical energy intensity of liquefaction and the carbon intensity of the electricity source. An additional multiplier may be added for the number of times the hydrogen must undergo liquefaction in its supply chain (e.g. does the hydrogen need to be re-liquefied after long-distance transport before loading onto the aircraft). This value may be identical for SMR or electrolysis.

In the production of liquid hydrogen, there is the potential for some loss of hydrogen via boiloff throughout the production and distribution process. Some of this hydrogen can potentially be recaptured by including a boiloff recovery system 714 at the expense of additional liquefaction energy 708. To account for both the loss and recovery of hydrogen, fractional loss (vented to atmosphere 716) and fractional boiloff recovery 714 terms may be included within the hydrogen model component. This yields a difference in the volume of hydrogen produced and the amount of hydrogen delivered. Similarly, the amount of additional hydrogen that is captured and re-liquified using a boiloff recovery system can be accounted for.

As hydrogen itself is a greenhouse gas, an emission term for the warming associated with direct hydrogen leaked to the atmosphere may be included. These emissions may be a function of the effective warming potential of hydrogen per unit directly emitted to the atmosphere and the mass of unrecoverable hydrogen, which is related to the mass of total produced hydrogen. Most losses in a hydrogen production system may be attributed to challenges of handling hydrogen in a cryogenic state. Leaks of hydrogen in a gaseous system may be assumed to be manageable with adequate passive controls (e.g., leak detection, sealing) and may not be included in the model component.

The general form for the carbon intensity of a liquid hydrogen production method is the sum of emissions contributions from gaseous hydrogen production, hydrogen liquefaction, and direct losses of hydrogen to the atmosphere. To convert this to the carbon intensity of a unit of *delivered* hydrogen, a term must be added to account for the energy use and emissions associated with the production and distribution of any unrecoverable hydrogen. This leads to the average carbon intensity of hydrogen per unit of hydrogen delivered. The general form for the lifecycle carbon intensity of a gaseous hydrogen production method excludes terms for liquefaction energy, direct emissions from hydrogen losses, and boiloff recovery; it may include the term for hydrogen production. Once this model is run for all hydrogen production methods, the aggregate carbon intensity of liquid hydrogen production and gaseous hydrogen production may be calculated as the weighted average of emissions intensities of hydrogen from each production method by its market share each year.

Returning to FIG. 1, the sustainable aviation fuel model component 132 may calculate the lifecycle carbon intensity of jet fuel when SAF is introduced to the market. The model component may account for SAF derived from different categories of biogenic feedstocks (e.g., fats, oils, and greases; sugars and starches; novel energy crops; wastes and residues) as well as SAF produced using electricity, known as e-fuels or power to liquid (PtL) fuels.

Input variables to the SAF model component 132 may include share of jet fuel in a model end year produced from a given feedstock source, insertion year for a fuel type from a given feedstock source, and a dimensionless market entry shape parameter for a fuel type from a given feedstock source. Input variables may additionally or alternatively include lifecycle carbon intensities for SAF produced by a given biogenic feedstock type, for electricity generation, and for gaseous hydrogen production. Input variables may additionally or alternatively include the energy intensity of PtL production, including direct air capture (DAC) for CO₂ extraction and production, the fraction of the product slate of PtL SAF that is usable as jet fuel and the hydrogen demand for PtL production with either no product recycling or full product recycling. Input variables may additionally or alternatively include the lifecycle emissions to produce a unit of PtL SAF, excluding emissions attributed to other fractions of the output slate used for heat production. Electricity demand and heat energy demand for PtL production may be input with either no product recycling or full product recycling. Electricity demand, heat energy demand, and hydrogen demand for PtL production may be input with specific output slate fractions. A further input variable includes the ratio of the mass flow of PtL including light hydrocarbons used for heat generation and for PtL alone in a product slate.

Output variables from the SAF model component 132 may include average carbon intensity of jet fuel (including SAF) by year, and the share of jet fuel produced by different production pathways by year.

The composition of all sources of jet fuel, including SAF jet fuel must add up to 100%. The share of conventional jet fuel from fossil sources for the model start year may be set at 100%. For each year of the model component, the remaining share of jet fuel after SAF introduction may be assumed to be conventional jet fuel. The market insertion curves for each type of SAF are similar to those described for hydrogen, and may be controlled by parameters such as market share in an end-model year, initial insertion year, and transition speed.

The aggregate carbon intensity of jet fuel including SAF may be the weighted average of the lifecycle carbon intensity of jet fuel from all feedstock sources weighted by their usage share each year. The form of the expression for the lifecycle CO₂ intensity of a SAF type is different for fuels produced from biomass and fuel produced from electricity. Each category of biogenic SAF may have a different lifecycle carbon intensity that includes emissions from feedstock cultivation, collection, and transportation, as well as fuel production and final distribution to the point of use. Within a feedstock category this value can vary greatly depending on the specific feedstock and production pathway used. For simplicity a single average value for each category may be used. This may be assumed to be a constant value for each year.

A constant value may also be used for the lifecycle carbon intensity of conventional jet fuel. Reductions to the carbon intensity of fossil jet fuel resulting from improvements to the petroleum extraction and refining process (to create low-carbon aviation fuel or LCAF) may be included in this model.

Unlike SAF from wastes and biomass, the carbon intensity of PtL fuel is not fixed. Rather, it is a function of the carbon intensities of electricity and hydrogen used to produce the fuel. Inputs to this portion of the model include the overall energy demand of PtL production (including the electricity for carbon extraction using DAC) and the fraction of the product slate that is a useful chain length to make jet fuel.

Quadratic curves generated from the output of the Fischer-Tropsch (FT) synthesis model may be used to calculate the electricity and heat energy requirements to produce one unit of PtL SAF from an input overall energy demand. This value may be calculated for two cases - one where the reactants are passed through the reactor only once (no recycling) and one where the light reactants are recycled through the reactor to maximize the yield of jet fuel (full recycling).

Electricity demand and heat energy demand for PtL production may be input with either no product recycling or full product recycling. These energy intensities may be used to calculate the actual electrical and thermal energy requirements for a chosen product slate of PtL fuel. The hydrogen demand for PtL is independent of the energy demand. It may however be based on the product slate fraction due to the variation in the amount of unreacted hydrogen in the product stream.

The carbon intensity of PtL fuel may be described as the sum of the carbon intensity of electricity consumption and hydrogen consumption. The carbon intensity of electricity generation may be input from an electricity grid model or provided as a constant (representing a dedicated electricity supply for PtL production). The carbon intensity of gaseous hydrogen may be taken from the hydrogen production model component. Thermal energy may be assumed to be sourced from the combustion of light hydrocarbons in the product slate, and their production emission may thus be attributed to the emission of the PtL fuel.

SAF produced from individual feedstocks may be grouped into the four described feedstock categories. Fats, oils and greases may include tallow, used cooking oil, palm fatty acid distillate, corn oil, soybean oil, rapeseed oil, camelina oil, palm oil, jatropha oil, etc. Sugars and starches may include sugarcane, corn grain, molasses, etc. Novel energy crops may include miscanthus, switchgrass, poplar, willow, eucalyptus, etc. Wastes and residues may include corn stover, forestry residues, waste gas, wheat straw, municipal solid waste, and agricultural residues. Appropriate conversion processes may be used for each feedstock, such as Fischer-Tropsch synthesis, hydroprocessed esters and fatty acids pathways, and alcohol-to-jet conversion. Some feedstocks may be processed using multiple pathways.

For each feedstock category, a default carbon intensity may be set as the median for the category, while the upper and lower bounds may be set by the SAF with the highest and lowest lifecycle carbon intensities. Optionally, only waste feedstocks may be included. This may include waste fats, oils, and greases, such as tallow, used cooking oil, and palm fatty acid distillate.

The PtL production model component may take into account the amount of syngas (e.g., mixture of hydrogen and carbon monoxide) reactant necessary to make a unit of hydrocarbon fuel. Since carbon dioxide is assumed to be the primary feedstock in this production process, the PtL production model may also include a reverse water-gas shift (RWGS) reactor for creating carbon monoxide for syngas from carbon dioxide. Hydrogen and carbon demands for PtL production may be set by running this PtL production model in two configurations: with and without product recycling (achieved by recursively cycling the outputs into the reactor until it converges on a product slate with a higher percentage of the desired chain length). Bounds on the energy demand for PtL production may be set by assumptions in the energy intensity of direct air capture (DAC) and the conditions inside the FT reactor. Heat and electrical energy requirements in the reactor were calculated from the reactor conditions including the specific heat coefficient of the reactor mix and the density inside the reactor (e.g., the density of air). The total electricity demand may be the sum of electricity for DAC and electricity for the FT reactor. The heat requirement for DAC may be assumed to come from the waste heat produced by the FT reaction (which is exothermic). Differences in the values of these terms with and without product recycling is a consequence of different demands for syngas.

Once future aircraft types 410 using novel energy carriers are added to the fleet, the fleetwide consumption of jet fuel (including SAF), hydrogen, and electricity can be calculated. The total production of hydrogen and SAF however is different, since in addition to being used directly, these energy carriers can also be used as a feedstock to produce other fuels. From the total production of different energy carriers, it is possible to calculate metrics showing the resources required to produce enough energy for aviation, including primary energy demand, biomass feedstock demand, and land use for energy crops and infrastructure.

Input variables to the energy demand model component may include fleetwide electrical energy consumption by battery electric aircraft, fleetwide hydrogen energy consumption by hydrogen aircraft, and fleetwide jet fuel energy consumption by conventionally fueled aircraft. Input variable may further include the share of electricity generated by each generation method, the share of hydrogen produced by each hydrogen production method, and the share of jet fuel produced from each feedstock category. Input variables may additionally or alternatively include an uncorrected hydrogen demand to make one unit of PtL, an uncorrected electricity demand to make one unit of PtL, a heat demand to make one unit of PtL, an electricity demand to produce a unit of gaseous hydrogen by a specific production process, and an electricity demand to liquify a unit of hydrogen. Input variables may additionally or alternatively include a fraction of hydrogen lost to atmospheric venting during the production process, a fraction of hydrogen captured by a boiloff recovery system, and a number of liquefactions in the hydrogen production process. Input variables may additionally or alternatively include the conversion efficiency of feedstock to SAF by energy content, the product slate fraction usable as jet fuel from a SAF production process, the average energy intensity of biomass in each feedstock category, and the land required to generate one unit of electrical or SAF energy (e.g., from infrastructure or crops). The input variables may additionally or alternatively include the total amount of liquid hydrogen produced for aviation, the total amount of gaseous hydrogen produced for aviation, the total electrical energy used directly in battery-powered aircraft, the total electrical energy used in hydrogen production for aviation, and the total electrical energy used for PtL SAF production for aviation. Input variables may additionally or alternatively include a ratio of hydrogen produced to hydrogen delivered (accounting for losses for atmospheric venting) and a ratio of hydrocarbons produced to hydrocarbons delivered by a FT reactor (accounting for additional light hydrocarbons used for heat generation). Input variables may additionally or alternatively include the specific hydrogen demand of PtL production (accounting for additional hydrogen used to produce light hydrocarbons for heat energy) and the specific electricity demand of PtL production (accounting for additional electricity used to produce light hydrocarbons for heat energy).

Output variables from the energy demand model component may include total electrical energy produced for aviation by generation method, total hydrogen energy produced for aviation by generation method, total SAF produced by feedstock category, total primary energy for aviation derived from fossil sources, from renewable electricity, and from biomass, total quantity of a certain category of biomass feedstock used to fulfill SAF demand, and total land use for energy production.

The demand of SAF from each feedstock category may be expressed as the product of the total jet fuel demand and the share of fuel produced from that feedstock. The total demand for all SAF types may be expressed as the difference between the demand for fossil jet fuel and the demand for *all* jet fuel. The total production of hydrogen may be expressed as the sum of liquid hydrogen demand for direct use in hydrogen aircraft and gaseous hydrogen demand for use as a feedstock in PtL SAF production. The total production of liquid hydrogen may be set equal to the fleetwide consumption of hydrogen fuel with an additional term for the amount of hydrogen lost through atmospheric venting in the production process. The amount of hydrogen lost to venting may be expressed as a function of the loss fraction and the boiloff recovery factor. The total production of gaseous hydrogen may be expressed as the product of PtL SAF production and the specific hydrogen demand of PtL. The total production of PtL SAF may be expressed as the product of total jet fuel demand and the market share of PtL. The specific hydrogen demand of PtL production may be derived from the Fischer-Tropsch synthesis model. Note that a correction term must be included for the additional hydrogen needed to produce light hydrocarbons used to supply heat energy for the reaction. The correction factor may be based on the heat energy demand of PtL production. Total hydrogen production may be split by production method based on the hydrogen production process market shares.

The total electricity generation for aviation may be expressed as the sum of electricity required for direct use in battery electric aircraft, for hydrogen production (for electrolysis, SMR, and liquefaction), and for PtL SAF production (for DAC and FT synthesis). The total electricity generation for direct consumption in battery electric aircraft may be equal to the electricity demand for such aircraft, since no loss terms are modelled for transmission to the point of use. The electricity energy required for hydrogen production may depend on both the state of matter of the hydrogen at use and the production method. The electricity required for gaseous hydrogen production for use as a SAF feedstock may be based on the market share and energy intensity of each hydrogen production process. The total electricity requirement for liquid hydrogen production may contains additional terms, such as the electricity required for liquefaction, and a factor accounting for the additional electricity consumption to produce hydrogen that is lost to atmospheric venting. The electrical energy of PtL SAF production may be derived from the FT synthesis model. The may be similar to the hydrogen demand for PtL SAF, whereby it includes a term for the electricity needed to produce the light hydrocarbons used to supply heat.

It is also possible to represent the total energy required for aviation based on its primary source (fossil energy, biomass, or renewable electricity). When linked to the hydrogen and electricity models, the primary energy associated with PtL production may inherit the primary energy properties of those systems. For simplicity, this model component may assume that all of the energy content in biomass-derived SAF is from the feedstock itself and may exclude additional energy inputs in the fuel production process.

From the total energy production, it may be possible to calculate the resources required to produce enough energy to power aviation. For a given SAF feedstock category, the conversion from SAF energy to quantity of biomass may be based on the energy density of the feedstock, the conversion efficiency from biomass to distillate, and the fraction of the product slate usable as jet fuel. There may also be a land requirement for energy generation, which may include land for renewable electricity generation infrastructure, as well as land for growing crops to make biomass-derived SAF. Land used for production facilities, as well as second-order land uses including as land required to mine materials for infrastructure construction, may be excluded. The total land requirement for aviation energy generation may thus be the sum of the land requirements for electricity and SAF production respectively.

Returning to FIG. 1, market based measures model 134 may be used to further reduce overall emissions. Carbon offsets and removals can be used to reduce or remove greenhouse gases from sectors outside of aviation to offset the residual emissions produced by aviation after all other emissions reduction strategies have been applied. Multiple carbon offsets and removal models may be applied independently of one another. The CORSIA models effects of a policy that is currently enacted. Custom global initiative (CGI) models the potential impact of a future coordinated carbon removal initiative by international aviation. Voluntary measures represent additional carbon dioxide removals or offsets purchased through voluntary carbon markets.

The CORSIA model implements the effects of the policy as developed by ICAO. Users may be presented with options to select which flights are included in the calculations. CORSIA may be applied to direct emissions from the combustion of jet fuel (e.g., tank-to-wake emissions). This quantity may not include emissions reductions due to SAF, but may comprise the emissions from all jet fuel consumed regardless of its origin. Emissions subject to CORSIA may then be calculated by taking the sum over all international flights between states participating in CORSIA in a given year, first by operator and then for the sector as a whole. CORSIA may only apply to international flights between participating ICAO member states. Flights between small or developing nations and the emissions of small operators with annual emissions less than 10,000 tons of CO₂ are excluded from the data set. Each operator's offset obligation may then be reduced by their emissions reduction due to SAF, as all SAF in this model is assumed to be a CORSIA-eligible fuel. Emissions reductions that can be claimed by an operator for CORSIA-eligible fuels are proportional to the lifecycle emission of the CORSIA-eligible fuel relative to the reference value for conventional jet fuel. This can be used to determine the net emissions for each operator over time, and those values can be summed to yield a fleetwide emissions reduction due to CORSIA. Input variables include the emission index of jet fuel, annual emissions by operator and year, and the list of routes subject to CORSIA by year. The output variable of this model is the annual emissions reduction due to CORSIA by operator and year.

CGI models may allow for the modeling of collective action by international aviation to catalyze a carbon removals program. An applicable time period in the future may be set. The structure of the model may be similar to that of the CORSIA model, adding additional variables, such as the ratio of operator versus individual growth factors, and the level of emissions below which annual emissions must be kept.

Market-based measures 134 may be calculated as a percentage of residual fleetwide emissions. Input variables may include residual emissions from aviation in each year, a starting year for carbon removal or offset purchases, the share of emissions to be offset in the starting year, and the annual growth rate of voluntary carbon removal purchases. A share of emissions offset may be calculated for a given year. The net emissions from aviation can then be determined by applying the greenhouse gas reductions array prior to voluntary measures. The total emissions reduction due to voluntary measures can then be determined by summing across all routes and aircraft types. This yields the output variable of annual net emissions from aviation after accounting for carbon offsets and removals.

Returning to FIG. 1, non-CO₂ emissions model 136 may also be added to modeling pipeline 100. One or more non-CO2 emissions models 136 may be applied to the forecasted aviation emissions information to generate a non-CO2 emission reduction potential over the future time period. The non-CO₂ emissions model 136 may be applied to the forecasted aviation emissions information in aggregate, rather than on a per-route basis. The non-CO2 emission reduction potential may then be used to indicate an aggregate climate impact. The potential climate impacts of different scenarios may be evaluated based on standard climate metrics and parameters such as radiative forcing, temperature response, and CO₂ equivalent emissions. Impulse response functions (IRFs) may be employed to represent the lifetime and decay of aviation-induced forcings. This may be in the form of a simple climate model or a more complex global circulation model. Global emissions estimates may be generated for in-flight emissions of carbon dioxide (CO₂), water vapor (H₂O), nitrogen oxides (NOx), sulfur oxides (SOx), and soot black carbon/organic carbon (BC/OC). Historical emissions data may be employed to determine the accumulated aviation induced atmospheric emissions. For example, CO₂ and NOx emissions have long half-lives in the atmosphere, and thus data from years prior to the model start year may be considered. A total climate impact model may apply emission index adjustment factors to account for the difference in in-flight emissions products of alternative propulsion methods from conventional kerosene-based jet fuel.

Known emissions index values may be used to generate annual emissions from conventional jet fuel. Global annual mean emission index values may be used, or flight phases may be separated out and filtered by engine type. As an example, emissions of NOx are a product of complete combustion and are therefore intrinsically dependent on a variety of factors, such as thrust setting, combustor temperature and engine efficiency. NOx emissions therefore vary not only throughout the flight envelope but also between different aircraft types. The future aircraft and fleet renewal model components may be used to reflect reduction in NOx emissions based on aircraft type.

The tank-to-wake CO₂ and non-CO₂ emissions for each year may be calculated by multiplying the total annual fuel consumption of each energy carrier with its respective emissions indices. Emissions indices for electric aircraft may be set to 0, and emissions indices for CO₂, SOx, and BC may be set to 0 for hydrogen fueled aircraft. However, it is possible that the presence of engine oil in hydrogen combustion engines may result in some soot emissions. Hydrogen combustion may produce thermal NOx, albeit at lower emissions indices than for conventional jet fuel combustion. As such, parameters input by a user for the sustainability strategies (e.g.,, aircraft strategies, energy strategies) may also be applied to non-CO₂ emissions models.

A number of assumptions can be made regarding the differences in fuel characteristics between SAF and conventional kerosene jet fuel, and the impacts on emissions products. Due to the difference in energy densities between SAF and kerosene-based fuels, an adjustment of 0.98 may be made to the emissions indices. SAF typically contains a higher hydrogen content per unit weight due to their primarily paraffinic nature. The emissions index for water vapor (eiH₂O) may thus be adjusted by 9%. Sulphur is not expected to be present within SAF and so the emissions index for sulfur (eiSOx) may be set to zero. Lastly, soot emissions are expected to reduce due to the adoption of SAF, owing to the absence of aromatics within the fuel. Due to stringent aircraft engine regulations which establish a minimum of 8% aromatic fuel content by vol for engine seal swell, SAF will need to be blended with aromatics to meet this requirement. This results in some uncertainty around likely soot emissions indices (eiBC) for SAF. To caveat this uncertainty, the user may select a soot particle number reduction between 5% to 48% to see the potential climate impact of soot emission reductions within this range, primarily to the radiative forcing due to the direct radiative effect of soot aerosols.

Radiative forcing values may be determined for one or more forcing types, such as carbon dioxide (CO₂), nitrogen oxide (NOx)-induced effects (short ozone (O₃), methane reduction (CH₄), long ozone (O₃), stratospheric water vapor (SWV)), water vapor (H₂O), sulphate aerosol (SO₄²⁻), nitrate aerosol (NO₃-), soot aerosol (BC/OC) and linear contrail and contrail-cirrus (C-C).

The non-CO₂ emissions model 136 may use an impulse response function (IRF) convolution integral which is a first-order approximation of the rate at which anthropogenic CO₂ is retained and removed from the atmosphere via the carbon cycle. The response of the CO₂ mixing ratio C(t) to a CO₂ emissions rate E(t) may be modelled using coefficients from carbon cycle ensemble studies. The non-CO₂ emissions model 136 may also allow the user to change the carbon cycle coefficients. Different carbon cycle models may be selected to have different degradation rates of CO₂ in the atmosphere. By determining the increase in background CO₂ due to the accumulation of aviation emissions (ΔC) for each year (e.g., between 1940 and 2050), the Stratospheric-Adjusted Radiative Forcing (SARF) due to aviation-induced CO2 may be determined for each year of interest. To calculate the effective radiative forcing (ERF) due to aviation CO2 emissions, the variable C may be first updated as the background CO₂ concentration in the year of interest. By subtracting the aviation component (ΔC) from the total atmospheric concentration of CO₂ (C) for each year, the radiative forcing due to non-aviation sectors may first be determined. The radiative forcing due to aviation activity may then be calculated by subtracting the non-aviation sector radiative forcing from the total radiative forcing due to all CO₂ calculated previously.

The time evolution of the radiative impact of a pulse of unit emission of NOx in a given year may be expressed as by a single exponential decay. In a similar fashion to the method of calculating the radiative forcing due to accumulated aviation-induced background CO₂ by summating the emissions from previous years and determining the fraction of atmospheric retention, the radiative forcing due to NOx emissions per year may be calculated as a summation of the radiative forcing for the emissions of the current year of interest (t = 0 to t = 1), and the radiative forcing due to remaining aircraft NOx-induced ozone and methane effects of previous years (t > 1). This may be achieved using a loop, which calculates how many years have surpassed since the starting year of interest, and multiplies the emissions of each previous year with the point in the temporal decay model corresponding with the number of years lapsed.

In reality, NOx effects such as ozone production have a non-linear dependence on local NOx concentration levels, so in regions where NOx concentrations are high, ozone production rates may be reduced. The abundance of hydroxyl radicals (-OH) changes with NOx emissions and influences the oxidation capacity of the atmosphere.

For short-lived forcings where the lifetime of the perturbation is assumed to be less than a year, annual global emissions may be modeled as a pulse, assuming even distribution of impact across the year. To determine these radiative forcing factors, yearly radiative forcing best estimates may be collated from numerous studies incorporating Global Circulation Models (GCMs), Simple Climate Models (SCMs) and Radiative Transfer Models (RTMs), and normalized typically by the mass of the emission species emitted for the year that is responsible for the forcing type. A median standardized radiative forcing value may then be calculated for each short-lived forcing type. Efficacy factors may also be applied to the radiative forcing values to account for the different rates of radiative feedbacks that connect the perturbations of different forcing agents with the subsequent global mean surface temperature change. Efficacy factors may be quantified as the ratio between the climate sensitivity parameter of a forcing agent compared to the climate sensitivity parameter for CO₂. Climate sensitivity parameters may be considered the equilibrium change in the annual mean global surface temperature following a doubling of the atmospheric equivalent carbon dioxide concentration.

The annual, global effective radiative forcing due to short-lived forcers (e.g., black carbon, soot, sulphate, nitrate, water vapor, contrail, and contrail cirrus) between model start year and end-model year may be determined by either multiplying the normalized factors by the projected emissions of that species, or in the case of contrail cirrus, the factor may be multiplied by the total projected flight track distance (km) for the current year of interest.

Forcing due to the nitrate aerosol may be modeled by relating the emissions of NOx as well as SOx and soot. Both nitrate aerosol and sulphate aerosol radiative forcings may be calculated from components attributed to NOx emissions and the emissions of oxidized sulfur (VI). The emissions of oxidized sulfur (VI) may be estimated from the emissions of sulfur dioxide. The radiative perturbation due to aviation water vapor emissions may be modelled using pre-calculated water vapor radiative forcing factor, assuming the efficacy of water vapor is 1. The radiative forcing due to linear contrails and contrail-cirrus may be calculated using a best estimate normalized to total annual flight distance.

The Global Mean Surface Temperature (GMST) is considered an important indicator of anthropogenic driven climate change. The non-CO₂ emissions model 136 may estimate the GMST response from aviation forcings of CO₂, NOx, H₂O, aerosols and contrails. This offers the user an insight into the potential near-term surface temperature changes due to aviation activity, and to assess and compare the impact of various strategies on near-term temperature change with respect to the baseline scenario.

The temperature response to aircraft emissions and their related climate forcings can be estimated using linear response model emulators based on an effective heat capacity of the ocean per unit area, the total radiative forcing, a climate sensitivity parameter that indicates surface level temperature change per unit radiative forcing, and the global average surface temperature anomaly. Temperature change due to annual emissions impacts may be based on radiative forcing over time, representing the integration of emissions impacts across one year.

Climate metrics provide a useful framework for the comparison of long-lived and short-lived forcings. The most commonly used metric is the Global Warming Potential (GWP), however, numerous other metrics may be used, such as the Global Temperature Potential (GTP) and Average Temperature Response (ATR). Climate metrics integrate the radiative forcing or temperature response, usually due to a 1 kg pulse of emission, over a specified time horizon (H). Time horizons are typically 20, 50, 100 or 500 years. Climate metrics can also be used to investigate the impacts of 'sustained' emissions over a period of time.

The disclosed non-CO₂ emissions model 136 may incorporate the GWP metric as a tool to enable the user to observe the influence of the time horizon on the assessment of CO₂-equivalent emissions, and in particular, to understand how the selection of a time horizon within a policy framework may influence future technology decisions. Any policy framework may need to consider the impact of different technology decisions on 'short' timeframes and 'longer' timeframes, and may additionally need to consider trade-offs between different technology choices, particularly trade-offs often encountered with proposals for non-CO₂ mitigation that may lead to increasing CO₂ emissions.

The Absolute Global Warming Potential (AGWP) may be determined for each forcing type by integrating the radiative forcing response over each time horizon being considered (e.g., H+ 20, 50, 100 years). This process takes the definite integral representing the radiative forcing response, where the limits are 0 and H. For forcings modelled as a pulse, the AGWP may be equivalent to the radiative forcing impact for the year starting at t=0. This is due to the assumption that the full impact of the pulse will take effect within a year with no longer term effect. The AGWP of a pulse may thus be equivalent to the radiative forcing impact of one year. For non-CO₂ forcing typed modelled by an impulse response function (IRF), e.g., NOx-induced effects, the AGWPs may be derived by integrating across the radiative forcing temporal response bounded by the time horizon. For example, the AGWP20 for the NOx-induced methane effect is calculated by determining the 20-year radiative forcing impact multiplied by an emission pulse of NOx. The GWP for each forcing type (x) is calculated by dividing the AGWPx(H) by the corresponding AGWP for CO₂ with the same time horizon (H). CO₂-equivalent emissions from model start year to end-model year may be derived by multiplying each global warming potential, GWPX(H), with the total emissions of species that each forcing type is normalized by.

Returning to FIG. 1, output metrics 138 may compare forecasted emissions information over a future time period (e.g., as modeled prior to applying sustainability strategies) to adjusted forecasted emissions information (e.g., modeled following one or more sustainability strategies are applied to the forecasted emissions information). An emissions reduction potential may be indicated over the future time period based on the adjusted forecasted emissions information. The emissions reduction potential may include reductions in fuel burn, energy consumption, CO₂ emissions, and various non-CO₂ emissions. The emissions reduction potential may include well-to-tank emissions, tank-to-wake emissions, well-to-wake emissions, etc. Output metrics may further include land use.

Output metrics 138 may indicate the emissions reduction potential over a future time period, between a start-model year (or baseline calculations based on the flight traffic data set) and a model-end year. In some examples, the output metrics 138 may indicate emissions reduction potential for each year of the future time period (e.g., for each intervening year between the start-model year and the model end year). Output metrics 138 may indicate the emissions reduction potential of each sustainability strategy model and model component as well as the overall emissions reduction potential.

Output metrics 138 may further include energy consumption on a per-route basis, greenhouse gas emissions on a per-route basis, payload capacity by aircraft type, average payload carried by aircraft type, and a series of variables expressed as a function of each aircraft type, route, and year, including total ton-kilometers, revenue ton-kilometers, revenue passenger capacity, revenue cargo capacity, available capacity, available passenger capacity, and available freight capacity. Such output metrics 138 may be determined over the future time period as a whole or annually. Additional output metrics 138 may include per-route, per-flight, and per-fleet emissions reduction potentials. Output metrics 138 may additionally or alternatively include non-CO₂ emission reduction potential and aggregate climate impact metrics.

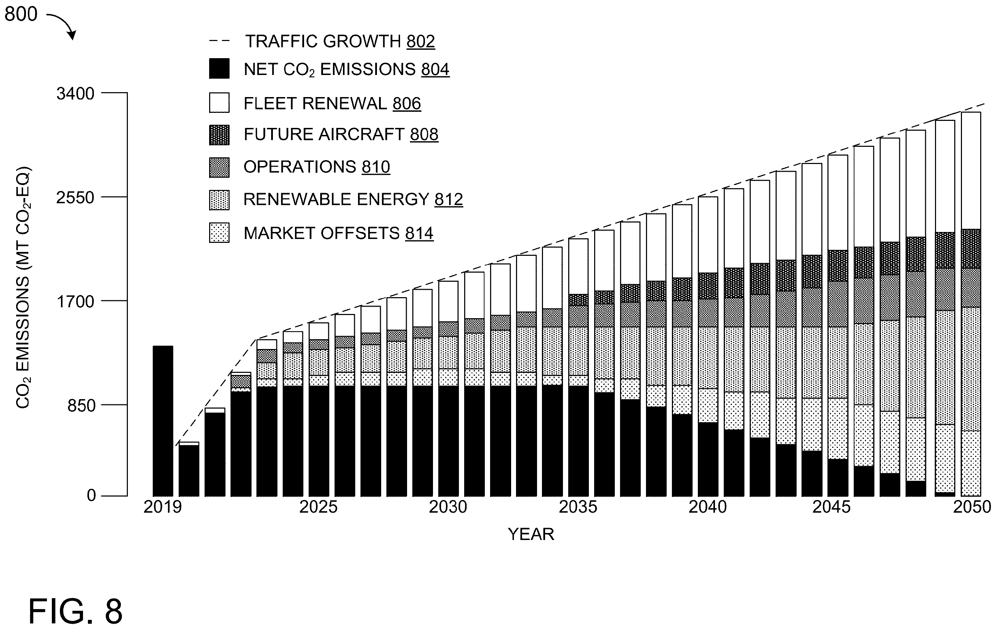

Output metrics 138 may be presented on a display device as a visualization 140. FIG. 8 shows an example visualization plot 800. Visualization plot 800 indicates CO₂ emissions (in Megatons (MT) CO₂-EQ) per year from 2019 (model start year) to 2050 (end-model year). Traffic growth 802 (dashed line) indicates the forecasted emissions information over the future time period. Each year of forecasted emissions information is shown in terms of emissions reduction potential, with net CO₂ emissions 804 shown in black. In this example, net CO₂ emissions 804 reach a value of 0 in 2050. Emissions reduction potential is shown annually for emission reductions based on fleet renewal 806, future aircraft 808 (insertion beginning in 2035), operations efficiency 810, renewable energy 812, and market offsets 814. In this way, the user may observe the amount of emissions reduction attributable to each sustainability strategy.

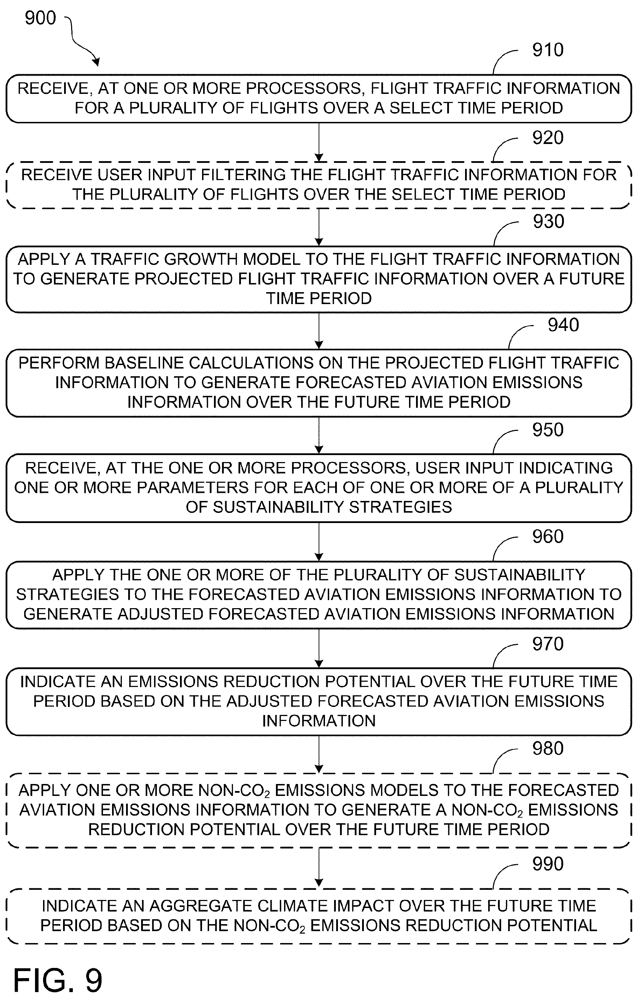

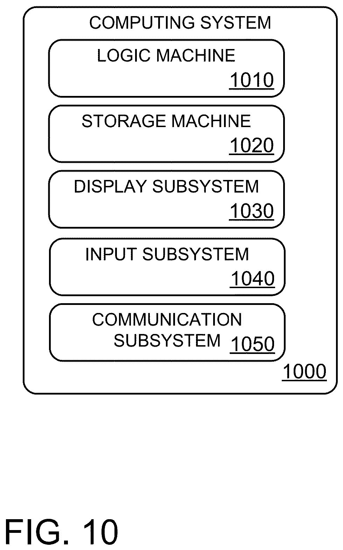

FIG. 9 shows a flow chart for an example method 900 for modeling sustainability strategies for an aviation industry. Method 900 may be considered an example method for implementing modeling pipeline 100 on a computing device comprising one or more processors, such as the computing device described herein and with regard to FIG. 10.

At 910, method 900 includes receiving, at one or more processors, flight traffic information for a plurality of flights over a select time period (e.g., flight traffic data set 102). For example, the flight traffic information may include a plurality of historical flight data, including metadata for flights such as origin/destination pair, operator, aircraft type, energy usage, fuel burn, emission, passenger load factor, cargo load factor, weather conditions, etc.

Optionally, at 920, method 900 includes receiving user input filtering the flight traffic information for the plurality of flights over the select time period (e.g., user input 104, filtering 108). The flight traffic information may be filtered based on market segment, carrier, geographical region, etc.

At 930, method 900 includes applying a traffic growth model to the flight traffic information to generate projected flight traffic information over a future time period (e.g., traffic growth model 110). The traffic growth model 110 may be a custom annual growth rate, a default growth forecast based on region pairs, etc. In examples, where the flight traffic information has been filtered based on user input, method 900 may include applying the traffic growth model 110 to the filtered flight traffic information to generate the projected flight traffic information.

At 940, method 900 includes performing baseline calculations (e.g., baseline calculations 112) on the projected flight traffic information to generate forecasted aviation emissions information over the future time period. In some examples, method 900 includes applying baseline calculations 112 to the projected flight traffic information to generate forecasted aviation emissions information comprising per-route emissions information. For example, the per-route emissions information may include one or more of fuel burn per route, energy consumption per route, and CO₂ emissions per route.

At 950, method 900 includes receiving, at the one or more processors, user input indicating one or more parameters for each of one or more of a plurality of sustainability strategies 116. The plurality of sustainability strategies 116 may include one or more of aircraft strategies (e.g., aircraft strategies models 118), operations efficiency strategies (e.g., operational efficiency models 124), energy source strategies (e.g., energy strategies model 126), and market-based carbon offset strategies (e.g., market-based measures model 134). The aircraft strategies 118 may include fleet renewal strategies (e.g., fleet renewal model components 120), future aircraft strategies (e.g., future aircraft model components 122), and/or aircraft route assignment strategies. The energy source strategies 126 may include one or more of sustainable aviation fuel models (e.g., sustainable aviation fuel model component 132), hydrogen fuel models (e.g., hydrogen model component 130), and electricity models (e.g., electricity model components 128). The sustainable aviation fuel models 132 may include power to liquid fuel models.

At 960, method 900 includes applying the one or more of the plurality of sustainability strategies 116 to the forecasted aviation emissions information to generate adjusted forecasted aviation emissions information. In examples wherein per-route aviation emissions information has been generated, method 900 may include applying the one or more of the plurality of sustainability strategies 116 to the forecasted aviation emissions information on a per-route basis.

At 960, method 900 includes indicating an emissions reduction potential over the future time period based on the adjusted forecasted aviation emissions information. The emissions reduction potential may indicate one or more of energy consumption over the future time period, CO₂ emissions over the future time period, and fuel burn over the future time period.

Optionally, at 980, method 900 includers applying one or more non-CO₂ emissions models 136 to the forecasted aviation emissions to generate a non-CO₂ emissions reduction potential over the future time period. For example, the non-CO₂ emissions reduction potential may include water vapor emissions reduction over the future time period, nitrogen oxides (NOx) emissions reduction over the future time period, sulfur oxides (SOx) emissions reduction over the future time period, and soot emissions reduction over the future time period. Optionally, at 990, method 900 includes indicating an aggregate climate impact over the future time period based on the non-CO₂ emissions reduction potential.

In some examples, method 900 further includes, at a display device, visually presenting the forecasted emissions information and the adjusted forecasted emissions information (e.g., visualization 140, visualization plot 800).

FIG. 10 schematically shows a non-limiting embodiment of a computing system 1000 that can enact one or more of the methods and processes described above. Computing system 1000 is shown in simplified form. Computing system 1000 may take the form of one or more personal computers, server computers, tablet computers, home-entertainment computers, network computing devices, gaming devices, mobile computing devices, mobile communication devices (e.g., smart phone), and/or other computing devices.

Computing system 1000 includes a logic machine 1010 and a storage machine 1020. Computing system 1000 may optionally include a display subsystem 1030, input subsystem 1040, communication subsystem 1050, and/or other components not shown in FIG. 10. Computing system 1000 is an example of a computing system that may be used to implement modeling pipeline 100 and method 900.

Logic machine 1010 includes one or more physical devices configured to execute instructions. For example, the logic machine 1010 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic machine 1010 may include one or more processors configured to execute software instructions. Additionally or alternatively, the logic machine 1010 may include one or more hardware or firmware logic machines configured to execute hardware or firmware instructions. Processors of the logic machine 1010 may be single-core or multi-core, and the instructions executed thereon may be configured for sequential, parallel, and/or distributed processing. Individual components of the logic machine 1010 optionally may be distributed among two or more separate devices, which may be remotely located and/or configured for coordinated processing. Aspects of the logic machine 1010 may be virtualized and executed by remotely accessible, networked computing devices configured in a cloud-computing configuration. Storage machine 1020 includes one or more physical devices configured to hold instructions executable by the logic machine to implement the methods and processes described herein. When such methods and processes are implemented, the state of storage machine 1020 may be transformed-e.g., to hold different data.

Storage machine 1020 may include removable and/or built-in devices. Storage machine 1020 may include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage machine 1020 may include volatile, nonvolatile, dynamic, static, read/write, read-only, random-access, sequential-access, location-addressable, file-addressable, and/or content-addressable devices.

It will be appreciated that storage machine 1020 includes one or more physical devices. However, aspects of the instructions described herein alternatively may be propagated by a communication medium (e.g., an electromagnetic signal, an optical signal, etc.) that is not held by a physical device for a finite duration.

Aspects of logic machine 1010 and storage machine 1020 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 1000 implemented to perform a particular function. In some cases, a module, program, or engine may be instantiated via logic machine 1010 executing instructions held by storage machine 1020. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

It will be appreciated that a "service", as used herein, is an application program executable across multiple user sessions. A service may be available to one or more system components, programs, and/or other services. In some implementations, a service may run on one or more server-computing devices.

When included, display subsystem 1030 may be used to present a visual representation of data held by storage machine 1020. This visual representation may take the form of a graphical user interface (GUI). As the herein described methods and processes change the data held by the storage machine 1020, and thus transform the state of the storage machine 1020, the state of display subsystem 1030 may likewise be transformed to visually represent changes in the underlying data. Display subsystem 1030 may include one or more display devices utilizing virtually any type of technology. Such display devices may be combined with logic machine 1010 and/or storage machine 1020 in a shared enclosure, or such display devices may be peripheral display devices.

When included, input subsystem 1040 may comprise or interface with one or more user-input devices such as a keyboard, mouse, touch screen, or game controller. In some embodiments, the input subsystem 1040 may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 1050 may be configured to communicatively couple computing system 1000 with one or more other computing devices. Communication subsystem 1050 may include wired and/or wireless communication devices compatible with one or more different communication protocols. As non-limiting examples, the communication subsystem 1050 may be configured for communication via a wireless telephone network, or a wired or wireless local- or wide-area network. In some embodiments, the communication subsystem 1050 may allow computing system 1000 to send and/or receive messages to and/or from other devices via a network such as the Internet.

Further, the disclosure comprises configurations according to the following examples.

Example 1. A method of modeling sustainability strategies for an aviation industry, the method comprising receiving, at one or more processors, flight traffic information for a plurality of flights over a select time period; applying a traffic growth model to the flight traffic information to generate projected flight traffic information over a future time period; performing baseline calculations on the projected flight traffic information to generate forecasted aviation emissions information over the future time period; receiving, at the one or more processors, user input indicating one or more parameters for each of one or more of a plurality of sustainability strategies; applying the one or more of the plurality of sustainability strategies to the forecasted aviation emissions information to generate adjusted forecasted aviation emissions information; and indicating an emissions reduction potential over the future time period based on the adjusted forecasted aviation emissions information.

Example 2. The method of example 1, wherein performing baseline calculations on the projected flight traffic information further comprises further comprising generating forecasted aviation emissions information comprising per-route emissions information; and applying the one or more of the plurality of sustainability strategies to the forecasted aviation emissions information on a per-route basis.

Example 3. The method of examples 1 to 2, wherein the per-route emissions information includes one or more of fuel burn per route, energy consumption per route, and CO₂ emissions per route.

Example 4. The method of examples 1 to 3, further comprising receiving user input filtering the flight traffic information for the plurality of flights over the select time period; and applying the traffic growth model to the filtered flight traffic information to generate projected flight traffic information.

Example 5. The method of examples 1 to 4, further comprising at a display device, visually presenting the forecasted aviation emissions information and the adjusted forecasted aviation emissions information.

Example 6. The method of examples 1 to 5, wherein the plurality of sustainability strategies includes one or more of aircraft strategies, operations efficiency strategies, energy source strategies, and market-based carbon offset strategies.

Example 7. The method of examples 1 to 6, wherein the aircraft strategies include one or more of fleet renewal strategies, future aircraft strategies, and aircraft route assignment strategies.

Example 8. The method of examples 1 to 7, wherein the energy source strategies include one or more of sustainable aviation fuel models, hydrogen fuel models, and electricity models.

Example 9. The method of examples 1 to 8, wherein the sustainable aviation fuel models include power to liquid fuel models.

Example 10. The method of examples 1 to 9, wherein the emissions reduction potential indicates one or more of energy consumption over the future time period and CO₂ emissions over the future time period.

Example 11. The method of examples 1 to 10, further comprising applying one or more non-CO₂ emissions models to the forecasted aviation emissions information to generate a non-CO₂ emission reduction potential over the future time period; and indicating an aggregate climate impact over the future time period based on the non-CO₂ emissions reduction potential.

Example 12. The method of examples 1 to 11, wherein the non-CO₂ emissions reduction potential indicates one or more of water vapor emissions reduction, nitrogen oxides (NOx) emissions reduction, sulfur oxides (SOx) emissions reduction, and soot emissions reduction over the future time period.

Example 13. A computing system for modeling sustainability strategies for an aviation industry, comprising a logic machine comprising one or more processors; a storage machine comprising instructions executable by the one or more processors to receive, at one or more processors, flight traffic information for a plurality of flights over a select time period; apply a traffic growth model to the flight traffic information to generate projected flight traffic information over a future time period; perform baseline calculations on the projected flight information to generate forecasted aviation emissions information over the future time period; receive, at the one or more processors, user input indicating one or more parameters for each of one or more of a plurality of sustainability strategies; apply the one or more of the plurality of sustainability strategies to the forecasted aviation emissions information to generate adjusted forecasted aviation emissions information; and indicate an emissions reduction potential over the future time period based on the adjusted forecasted aviation emissions information.

Example 14. The computing system of example 13, wherein the plurality of sustainability strategies includes one or more of aircraft strategies, operations efficiency strategies, energy source strategies, and market-based carbon offset strategies. Example 15. The computing system of examples 13 to 14, wherein the aircraft strategies include aircraft route assignment strategies.

Example 16. The computing system of examples 13 to 15, wherein the energy source strategies include one or more of sustainable aviation fuel models, hydrogen fuel models, and electricity models.

Example 17. The computing system of examples 13 to 16, wherein the sustainable aviation fuel models include power to liquid fuel models.

Example 18. The computing system of examples 13 to 17, wherein the emissions reduction potential indicates one or more of energy consumption, fuel burn, and CO₂ emissions over the future time period.

Example 19. The computing system of examples 13 to 18, wherein the storage machine further holds instructions executable by the one or more processors to apply one or more non-CO₂ emissions models to the forecasted aviation emissions information to generate a non-CO₂ emission reduction potential over the future time period; and indicate an aggregate climate impact over the future time period based on the non-CO₂ emissions reduction potential.

Example 20. A storage machine comprising instructions executable by one or more processors to receive, at one or more processors, flight traffic information for a plurality of flights over a select time period; apply a traffic growth model to the flight traffic information to generate projected flight traffic information over a future time period; perform baseline calculations on the projected flight information to generate forecasted aviation emissions information over the future time period; receive, at the one or more processors, user input indicating one or more parameters for each of one or more of a plurality of sustainability strategies; apply the one or more of the plurality of sustainability strategies to the forecasted aviation emissions information to generate adjusted forecasted aviation emissions information; and indicate an emissions reduction potential over the future time period based on the adjusted forecasted aviation emissions information.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computer-implemented method (900) of modeling sustainability strategies (116) for an aviation industry, the method (900) comprising:
receiving (910), at one or more processors (1010), flight traffic information (102) for a plurality of flights over a select time period;
applying (930) a traffic growth model (110) to the flight traffic information (102) to generate projected flight traffic information over a future time period;
performing (940) baseline calculations (112) on the projected flight traffic information to generate forecasted aviation emissions information over the future time period;
receiving (950), at the one or more processors (1010), user input (104) indicating one or more parameters for each of one or more of a plurality of sustainability strategies (116);
applying (960) the one or more of the plurality of sustainability strategies (116) to the forecasted aviation emissions information to generate adjusted forecasted aviation emissions information; and
indicating (970) an emissions reduction potential over the future time period based on the adjusted forecasted aviation emissions information.

2. The method (900) of claim 1, wherein performing (940) baseline calculations (112) on the projected flight traffic information further comprises:
generating forecasted aviation emissions information comprising per-route emissions information; and
applying the one or more of the plurality of sustainability strategies (116) to the forecasted aviation emissions information on a per-route basis.

3. The method (900) of claim 2, wherein the per-route emissions information includes one or more of fuel burn per route, energy consumption per route, and CO₂ emissions per route.

4. The method (900) of any one of the preceding claims, further comprising:
receiving (920) user input (104) filtering the flight traffic information (102) for the plurality of flights over the select time period; and
applying the traffic growth model (110) to the filtered flight traffic information to generate projected flight traffic information.

5. The method (900) of any one of the preceding claims, further comprising:
at a display device (1030), visually presenting (140) the forecasted aviation emissions information and the adjusted forecasted aviation emissions information.

6. The method (900) of any one of the preceding claims, wherein the plurality of sustainability strategies (116) includes one or more of aircraft strategies (118), operations efficiency strategies (124), energy source strategies (126), and market-based carbon offset strategies (134).

7. The method (900) of claim 6, wherein the aircraft strategies (118) include one or more of fleet renewal strategies (120), future aircraft strategies (122), and aircraft route assignment strategies (400).

8. The method (900) of claim 6 or 7, wherein the energy source strategies (126) include one or more of sustainable aviation fuel models (132), hydrogen fuel models (130), and electricity models (128).

9. The method (900) of claim 8, wherein the sustainable aviation fuel models (132) include power to liquid fuel models.

10. The method (900) of any one of the preceding claims, wherein the emissions reduction potential indicates one or more of energy consumption over the future time period and CO₂ emissions over the future time period.

11. The method (900) of any one of the preceding claims, further comprising:
applying (980) one or more non-CO₂ emissions models (136) to the forecasted aviation emissions information to generate a non-CO₂ emission reduction potential over the future time period; and
indicating (990) an aggregate climate impact over the future time period based on the non-CO₂ emissions reduction potential.

12. The method (900) of claim 11, wherein the non-CO₂ emissions reduction potential indicates one or more of water vapor emissions reduction, nitrogen oxides (NOx) emissions reduction, sulfur oxides (SOx) emissions reduction, and soot emissions reduction over the future time period.

13. A computing system (1000) for modeling sustainability strategies (116) for an aviation industry, comprising:
a logic machine (1010) comprising one or more processors;
a storage machine (1020) comprising instructions executable by the one or more processors of the logic machine (1010) to perform the method (900) according to any one of claims 1 to 12.

14. The computing system (1000) of claim 13 further comprising a display subsystem (1030) configured to present a visual representation of data held by said storage machine (1020), an input subsystem (1040), and a communication subsystem (1050) configured to communicatively couple computing system (1000) with one or more other computing devices.

15. A storage machine (1020) comprising instructions executable by one or more processors (1010) of the logic machine (1010) to perform the method (900) according to any one of claims 1 to 12.
